(19) Europäisches Patentamt
European Patent Office
Office européen des brevets

(11) EP 1 004 870 A1

(12) EUROPEAN PATENT APPLICATION

(43) Date of publication:
**31.05.2000 Bulletin 2000/22**

(51) Int. Cl.[7]: **G01N 1/28**, G01N 33/50

(21) Application number: **99122323.1**

(22) Date of filing: **09.11.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **09.11.1998 US 188866**

(71) Applicant:
**Aurora Biosciences Corporation**
**San Diego, CA 92121 (US)**

(72) Inventors:
- **Sasaki, Glenn**
  **Rancho Santa Fe, Ca.90921 (US)**
- **Coassin, Peter J.**
  **Encinitas, Ca. 92024 (US)**
- **Pham, Andrew A.**
  **Del Mar, Ca 92014 (US)**
- **Harootunian, Alec**
  **Del Mar, Ca. 92014 (US)**
- **Mere, Lora**
  **San Diego. Ca. 92122 (US)**
- **Cubitt, Andrew B.**
  **San Diego, Ca. 92131 (US)**

(74) Representative:
**VOSSIUS & PARTNER**
**Siebertstrasse 4**
**81675 München (DE)**

(54) **Liquid barriers for assays**

(57) The present invention provides liquid barriers that can reduce the evaporation of a liquid sample and is compatible with living cells. The liquid barriers of the present invention replace the need for mechanical barriers, such as lids and covers, for use with assay containers, such as multi-well platforms. The use of such liquid barriers rather than mechanical barriers reduces the need for robotics in automated screening procedures and thus allows for higher throughput in such procedures.

EP 1 004 870 A1

## Description

The present invention relates generally to liquid barriers that separate an assay sample from another environment. These liquid barriers are particularly useful as a barrier between a liquid sample and a gaseous environment and preferably prevent evaporation of the liquid sample while allowing the passage of reagents, such as solids, liquids, cells, and respiratory gases into the assay sample. These properties are preferable when the assay sample includes an analyte such as a cell, especially when the analyte is in a small assay volume.

Barriers between an assay sample and another environment, such as a gaseous environment, have traditionally been mechanical, solid barriers, such as caps and covers for reaction containers, such as microtiter plates, microcentrifuge tubes, test tubes, and the like. In the course of miniaturizing and automating assay systems using microtiter wells that contain an analyte such as at least one cell, such as a mammalian cell, the inventors recognized that when the volume of the assay sample was reduced, the effects of evaporation became problematic. Mechanical barriers, while effectively reducing evaporation in an assay sample, were found to be problematic because automation procedures using such mechanical barriers necessitate additional robotic components to remove, hold, and replace the mechanical barrier. In addition to necessitating additional robotics, mechanical barriers can increase the rate at which the assay samples are contaminated because of the additional manipulation steps involved.

Non-mechanical barriers, such as paraffin wax have been used in polymerase chain reaction (PCR) procedures. These barriers, however, are not particularly compatible with living biological systems, such as cell culture. For example, paraffin wax is solid at incubation temperatures preferred by most cells in culture and does not permit the efficient transfer of respiratory gases or other reagents through the baffler into the assay sample. Thus, often the non-mechanical barriers known in the art are not well suited for handling samples in an automated fashion and are generally problematic when the sample is a cell culture used to determine the activity of test chemicals.

Thus, the technical problem underlying the present invention was to provide a liquid barrier that overcomes the above problems and disadvantages of the prior art barriers.

The solution to this technical problem is achieved by providing the embodiments characterized in the claims.

In addition to being permeable to gases, liquids, cells, and solids, and not substantially partitioning test chemicals, the liquid barrier of the present invention has additional preferable characteristics. The liquid barrier of the present invention is preferably less dense than aqueous solutions so that the liquid barrier can form on top of an aqueous solution. Also, the liquid barrier of the present invention is preferably optically clear (for example, does not substantially absorb electromagnetic radiation in the ultra-violet, visible, or infrared regions) and is preferably substantially non-fluorescent so that a sample can be characterized by its optical or fluorescent properties without requiring additional sample manipulation steps, such as sample transfer. Furthermore, the liquid barrier of the present invention is preferably non-toxic, non-volatile, and inert to the components of the assay system (such as, for example, cells in culture, proteins, peptides, nucleic acids, carbohydrates, sugars, lipids, and combinations thereof), hardware (such as, for example, filters, such as membrane filters, containers, plates), and other reagents, so that the results obtained by the assay are not substantially altered by the liquid barrier. In addition, the liquid barrier of the present invention is preferably substantially non-soluble in aqueous solutions and solvents, such as DMSO, which are used in some assay procedures. Also, the liquid barrier of the present invention preferably does not substantially partition assay reagents so that the components of the assay sample become or remain substantially complete. Furthermore, the liquid barrier of the present invention is preferably of low viscosity, which promotes efficient dispensing of the liquid by a variety of methods and devices as they are known in the art and are later developed. This can also aid in the ability of reagents to migrate through the liquid barrier. In addition, the liquid barrier of the present invention can be preferably penetrated by a liquid dispensed through the liquid barrier.

Surprisingly, the liquid barrier of the present invention can increase the sensitivity and precision of an assay as compared to assays performed without a mechanical barrier. The present invention provides other related benefits as well.

### The Figures show:

**FIG. 1A, 1B, and 1C** depict a frequency distribution of screening procedures described in **Example 4** using 96-well plates using mechanical (**FIG. 1A**) and liquid barriers (**FIG. 1B**). The two populations were determined not to be significantly different (N = 480, $p<0.05$). **FIG. 1C** is an overlay of **FIG. 1A** and **FIG. 1B**.

One aspect of the present invention is a device comprising a container, a sample, and a liquid barrier, wherein the liquid barrier can reduce evaporation of a sample, is compatible with cells and is does not substantially partition test chemicals. The liquid barrier preferably allows the exchange of respiratory gases, such as oxygen and carbon

dioxide, between the sample and the atmosphere, which may allow for cells to respire. A liquid barrier typically is less than about 5 mm in thickness and allows the dispensation of aqueous solutions through the liquid barrier into a sample below. Furthermore, a liquid barrier typically has low fluorescence and typically does not substantially interfere with the optical properties of the sample (such as absorbance), allowing for fluorescence and optical detection methods to be used. Liquid barriers can provide additional benefits useful for screening test chemicals for an activity, such as during screening for a relevant biological activity.

Another aspect of the present invention is a method of making a liquid barrier, comprising the steps of contacting a sample with a liquid barrier. The liquid barrier can be added to the container before or after the sample. Optionally, the sample can be provided in a container, such as a multi-well platform.

A further aspect of the present invention is a system of spectroscopic measurements, comprising at least one reagent for an assay and a device comprising a liquid barrier. The system optionally comprises a container and can include a detector with or without a computational unit, such as a computer, to control the detector or other components of the system (such as a dispenser(s) container transfer unit(s), or incubator(s)). This system can be used to screen compounds for activity using automated procedures (including computer-controlled protocols).

An additional aspect of the present invention is a method for detecting the presence of an analyte in at least one sample comprising a liquid barrier. This method can be used in automated procedures to identify chemical compounds with biological activity.

Another aspect of the present invention is a method for identifying a modulator or a therapeutic in at least one sample comprising a liquid barrier. The sample can optionally be provided in a container.

A further aspect of the present invention is a chemical, modulator or therapeutic identified by at least one method of the present invention. The sample can optionally comprise a container.

An additional aspect of the present invention is a method for testing a therapeutic for therapeutic activity and toxicology by identifying a therapeutic using at least one method of the present invention, and monitoring the toxicology and efficacy of the therapeutic in *in vivo* models.

Another aspect of the present invention is a composition comprising a therapeutic identified using a method(s) of the present invention.

Unless defined otherwise, all technical and scientific terms used herein have the same meaning as commonly understood by one of ordinary skill in the art to which this invention belongs. Generally, the nomenclature used herein, and the laboratory procedures in spectroscopy, drug discovery, cell culture, molecular genetics, plastic manufacture, polymer chemistry, protein chemistry, diagnostics, amino acid and nucleic acid chemistry, lipid chemistry, carbohydrate chemistry, and sugar chemistry described below, are those well known and commonly employed in the art. Standard techniques are typically used for preparation of plastics, signal detection, recombinant nucleic acid methods, polynucleotide synthesis, and microbial culture and transformation (e.g., electroporation, lipofection). The techniques and procedures are generally performed according to conventional methods in the art and various general references (*see* generally, Sambrook et al. Molecular Cloning: A Laboratory Manual, 2d ed. (1989) Cold Spring Harbor Laboratory Press, Cold Spring Harbor, N.Y., and Lakowicz, J.R. *Principles of Fluorescence Spectroscopy*, New York: Plenum Press (1983), which are incorporated herein by reference) which are provided throughout this document. Standard techniques are used for chemical syntheses, chemical analyses, and biological assays. As employed throughout the disclosure, the following terms, unless otherwise indicated, shall be understood to have the following meanings:

"Binding pair" refers to two moieties (e.g. chemical or biochemical) that have an affinity for one another. Examples of binding pairs include antigen/antibodies, lectin/avidin, target polynucleotide/probe oligonucleotide, antibody/anti-antibody, receptor/ligand, enzyme/ligand, nucleic acid/nucleic acid, nucleic acid/protein and the like. "One member of a binding pair" refers to one moiety of the binding pair, such as an antigen or ligand.

"Dye," "pigment," or "chromophore" refer to a molecule or part of a compound that absorbs specific frequencies of light, including but not limited to ultraviolet light.

"Fluorophore" refers to a chromophore that fluoresces.

"Membrane-permeant derivative" refers to a chemical derivative of a compound that has enhanced membrane permeability compared to an underivativized compound. Examples include ester, ether and carbamate derivatives. These derivatives are better able to cross cell membranes, i.e. are membrane permeant, because hydrophilic groups are masked to provide more hydrophobic derivatives. Also, masking groups are designed to be cleaved from a precursor (e.g., fluorogenic substrate precursor) within the cell to generate the derived substrate intracellularly. Because the derived substrate is more hydrophilic than the membrane permeant derivative, the derived substrate becomes trapped within the cells. Preferred membrane permeant compounds have permeability across a membrane of an eukaryotic cell at 37°C of at least about that of CCF2/AM (*see*, U.S. Patent No. 5,741,657, to Tsien et al., issued 4/21/97; and WO 96/30540 to Tsien et al., published 10/2/96). Preferred membrane impermeant compounds have permeability across a membrane of a eukaryotic cell at 37°C of about or less than CCF2 (*see*, U.S. Patent No. 5,741,657 to Tsien et al., issued 4/21/98; and WO 96/30540 to Tsien et al., published 10/3/96). "Isolated polynucleotide" refers to a polynucleotide of genomic, cDNA, RNA, or synthetic origin, or some combination thereof, which by virtue of its origin

the "isolated polynucleotide" (1) is not associated with the cell in which the "isolated polynucleotide" is found in nature, or (2) is operably linked to a polynucleotide which it is not linked to in nature.

"Isolated protein" refers to a protein of cDNA, recombinant RNA, RNA or synthetic origin, or some combination thereof, which by virtue of its origin the "isolated protein" (1) is not associated with proteins that it is normally found with in nature, or (2) is isolated from the cell in which it normally occurs, or (3) is isolated free of other proteins from the same cellular source, e.g. free of human proteins, or (4) is expressed by a cell from a different species, or (5) does not occur in nature. "Isolated naturally occurring protein" refers to a protein, which by virtue of its origin, the "isolated naturally occurring protein" (1) is not associated with proteins that it is normally found within nature, or (2) is isolated from the cell in which it normally occurs, or (3) is isolated free of other proteins from the same cellular source, e.g. free of human proteins.

"Polypeptide" as used herein as a generic term to refer to native protein, fragments thereof, active fragments thereof or analogs of a polypeptide sequence. Hence, native protein, fragments, and analogs are species of the polypeptide genus.

"Naturally-occurring" as used herein, as applied to an object, refers to the fact that an object can be found in nature. For example, a polypeptide or polynucleotide sequence that is present in an organism (including viruses) that can be isolated from a source in nature and which has not been intentionally modified by man in the laboratory is naturally-occurring.

"Operably linked" refers to a juxtaposition wherein the components so described are in a relationship permitting them to function in their intended manner. A control sequence "operably linked" to a coding sequence is ligated in such a way that expression of the coding sequence is achieved under conditions compatible with the control sequences.

"Control sequence" refers to polynucleotide sequences which are necessary to effect the expression of coding and non-coding sequences to which they are ligated. The nature of such control sequences differs depending upon the host organism. In prokaryotes, such control sequences generally include promoter, ribosomal binding site, and transcription termination sequence. In eukaryotes, generally, such control sequences include promoters and transcription termination sequence. The term "control sequences" is intended to include, at a minimum, components whose presence can influence expression and can also include additional components whose presence is advantageous, for example, leader sequences and fusion partner sequences.

"Polynucleotide" refers to a polymeric form of nucleotides of at least 10 bases in length, either ribonucleotides or deoxynucleotides, or a modified form of either type of nucleotide. The term includes single, double, and triple stranded forms of DNA.

"Corresponds to" in the context of polynucleotides refers to a polynucleotide sequence that is homologous (i.e., is identical, not strictly evolutionarily related) to all or a portion of a reference polynucleotide sequence, or that a polypeptide sequence is identical to a reference polypeptide sequence. In contradistinction, the term "complementary to" is used herein to mean that the complementary sequence is homologous to all or a portion of a reference polynucleotide sequence. For illustration, the nucleotide sequence "TATAC" corresponds to a reference sequence "TATAC" and is complementary to a reference sequence "GTATA".

"Polypeptide fragment" refers to a polypeptide that has an amino-terminal and/or carboxy-terminal deletion, but where the remaining amino acid sequence is usually identical to the corresponding positions in the naturally-occurring sequence deduced, for example, from a full-length cDNA sequence. Fragments typically can be at least 5, 6, 8, or 10 amino acids long, preferably at least 14 amino acids long, more preferably at least 20 amino acids long, usually at least 50 amino acids long, and can be at least 70 amino acids long.

"Functional fragment" means a fragment or a parent molecule that retains at least a portion of at least one function or activity of the parent molecule.

"Container" means any container as is known in the art capable of holding a sample, such as for example, vials, tubes, test tubes, at least one well of a multi-well platform (such as the well of a microtiter plate), and plates having predetermined indentations, scratches, grooves, or other such means to hold a sample and a liquid barrier. A container preferably has at least one portion that is a high transmittance portion.

"Platform" refers to a platform with an identifiable site or sites, eg. multi-well platform, unless otherwise modified in the context of its usage. Such multi-well platforms can have any appropriate configuration known in the art or later developed, such as a variety of number of wells, footprint size and shape, well shape, opaque or clear well wall, or opaque or clear well bottom (*see*, Corning 1998/1999 Catalogue; NUNC™ Products, Laboratory products for cell culture, molecular biology, cryopreservation and immunology, 1998-1999 catalogue). Preferred multi-well platforms are described in PCT application No. PCT/US98/11061, filed 6/2/98, entitled "Low background multi-well plates and platforms for spectroscopic measurements."

"Modulation" refers to the capacity to either enhance or inhibit a functional property of biological activity or process (e.g., enzyme activity or receptor binding). Such enhancement or inhibition may be contingent on the occurrence of a specific event, such as activation of a signal transduction pathway, and/or may be manifest only in particular

cell types.

The term "modulator" refers to a chemical compound (naturally occurring or non-naturally occurring), such as a biological macromolecule (e.g., nucleic acid, protein, nonpeptide, or organic molecule), or an extract made from biological materials such as bacteria, plants, fungi, or animal (particularly mammalian) cells or tissues. Modulators are evaluated for potential activity as inhibitors or activators (directly or indirectly) of a "biological process or processes" (e.g., agonist, partial antagonist, partial agonist, antagonist, antineoplastic agents, cytotoxic agents, inhibitors of neoplastic transformation or cell proliferation, cell proliferation-promoting agents, and the like) by inclusion in screening assays described herein. The activity of a modulator may be known, unknown or partially known.

The term "test chemical" refers to a chemical to be tested by one or more method(s) of the invention as a putative modulator.

The term "analyte" refers to a moiety to be tested, preferably by one or more methods of the present invention. Analytes include, but are not limited to, cells (such as prokaryotic cells, eukaryotic cells, mammalian cells and human cells), proteins, peptides, amino acids, nucleic acids, nucleotides, nucleosides, lipids, carbohydrates, organic molecules, small organic molecules, inorganic molecules, active portions of such moieties, and combinations, mixtures, or libraries of these moieties.

The terms "label" or "labeled" refers to incorporation of a detectable marker, e.g., by incorporation of a radiolabeled amino acid, enzyme, or biotinyl moieties or attachment to a polypeptide of biotinyl moieties that can be detected by marked avidin (e.g., streptavidin containing a fluorescent marker or enzymatic activity that can be detected by optical or colorimetric methods). Various methods of labeling polypeptides and glycoproteins are known in the art and may be used. Examples of labels for polypeptides include, but are not limited to, the following: radioisotopes (e.g., $^{3}H$, $^{14}C$, $^{35}S$, $^{125}I$, $^{131}I$), fluorescent labels (e.g., FITC, rhodamine, lanthanide phosphors), enzymatic labels (or reporter genes) (e.g., horseradish peroxidase, beta-galactosidase, beta-lactamase, luciferase, alkaline phosphatase), chemiluminescent labels, biotinyl groups, predetermined polypeptide epitopes recognized by a secondary reporter (e.g., leucine zipper pair sequences, binding sites for secondary antibodies, metal binding domains, epitope tags). In some embodiments, labels are attached by spacer arms of various lengths to reduce potential steric hindrance.

"Fluorescent label" refers to incorporation of a detectable marker, e.g., by incorporation of a fluorescent moiety to a chemical entity that binds to a target or attachment to a polypeptide of biotinyl moieties, that can be detected by avidin (e.g., streptavidin containing a fluorescent label or enzymatic activity that can be detected by fluorescence detection methods) or other moieties. Various methods of labeling polypeptides and glycoproteins are known in the art and may be used. Examples of labels for polypeptides or other moieties include, but are not limited to dyes (e.g., FITC and rhodamine), intrinsically fluorescent proteins, and lanthanide phosphors. In some embodiments, labels are attached by spacer arms of various lengths to reduce potential steric hindrance.

"Reporter gene" refers to a nucleotide sequence encoding a protein that is readily detectable, either by its presence or activity, including, but not limited to, luciferase, green fluorescent protein, chloramphenicol acetyl transferase, beta-galactosidase, secreted placental alkaline phosphatase, beta-lactamase, secreted beta-lactamase, cytosolic beta-lactamase, human growth hormone, and other secreted enzyme reporters. Generally, reporter genes encode a polypeptide not otherwise produced by the host cell which is detectable by analysis of the cell(s), e.g., by the direct fluorometric, radioisotopic or spectrophotometric analysis of the cell(s) and preferably without the need to remove the cells for signal analysis of a well. Preferably, the gene encodes an enzyme that produces a change in fluorometric properties of the host cell that is detectable by qualitative, quantitative, or semi-quantitative function of transcriptional activation. Exemplary enzymes include esterases, phosphatases, proteases (such as, for example, tissue plasminogen activator or urokinase), and other enzymes, such as lactamases or galactosidases, whose function can be detected by appropriate chromogenic or fluorogenic substrates known to those skilled in the art (*see*, for example, U.S. Patent No. 5,741,657, to Tsien et al., issued 4/21/98; and WO 98/13353 to Whitney et al., published 4/2/98). Proteins, particularly enzymes encoded by reporter genes can also be used as probes in biochemical assays, for instance after proper conjugation to either the target or a chemical entity that binds to the target.

"Optical property" refers to a characteristic of a sample that can be detected or measured using optics, including the human eye, such as, for example, fluorescence, transmittance, absorbance, reflection, scattering, refraction or any other characteristic as such term is known in the art.

"Transmittance" refers to the fraction of incident light that passes through a medium at a given wavelength. It can also be considered the ratio of radiant power transmitted through a medium to the radiant power incident on the medium at a particular wavelength.

"Fluorescent measurement" refers to the measurement of fluorescence from a sample, such as from a sample in a well of a multi-well platform, by any appropriate methods and instrumentation known in the art or later developed. Such fluorescence measurements can be used to measure enzyme activity (*see*, for example, WO 97/28261 to Tsien et al., published 8/7/97; PCT/US97/12410 to Tsien, filed 7/16/97), reporter gene activity (*see*, for example, U.S. Patent No. 5,625,048 to Tsien et al., filed 4/29/97; U.S. Patent No. 5,777,079 to Tsien et al., issued 7/7/98; PCT/US97/14593 to Tsien, filed 8/15/97; U.S. Patent No. 5,741,657 to Tsien et al., issued 4/21/98; WO 96/30540 to

Tsien et al., published 10/3/96) membrane potential (*see*, for example, U.S. Patent No. 5,661,035 to Tsien et al., issued 8/26/97; WO 96/41166 to Tsien et al., published 12/19/96) and for use in functional genomics (*see*, for example, WO 98/13353 to Whitney et al., published 4/2/98).

"Absorbance measurement" refers to the measurement of absorbance of light by a sample, such as a sample in a multi-well platform using appropriate methods and instrumentation known in the art or later developed.

"Plurality of living cells refers to one or more cells, wherein the cells can be prokaryotic, eukaryotic or a mixture thereof.

"Sample" means any sample, such as liquid (preferably aqueous), solid, gaseous, or any combination thereof Samples can include *in vivo, in vitro* or *ex vivo* biological processes, such as enzymatic reactions (including PCR) and cells in cultures (including prokaryotic cells and eukaryotic cells, such as mammalian cells, such as human cells).

"Photon reducing agent" refers to a compound that can reduce the emission of a photon from a sample as described in the United States patent application No. 09/118,497, filed 7/17/98, to Zlokarnik et al. entitled "Photon Reducing Agents for Cellular Fluorescent Assays."

"Photon producing agent" refers to a compound that can produce a photon as described in the United States utility patent application No. 09/118,497, filed 7/17/98, to Zlokarnik et al. entitled "Photon Reducing Agents for Cellular Fluorescent Assays."

"Photon scattering agent" refers to a compound that can scatter light, such as particles, such as carbon black.

"Photon reflecting agents" refers to a compound that can reflect light.

"Target" refers to any biological entity, such as a protein, sugar, carbohydrate, nucleic acid, lipid, a cell or population of cells or an extract thereof, a vesicle, or any combination thereof.

"System" refers to a system for measurement of a physical property, such as spectroscopic measurement For example, a system includes: a reagent for an assay, a device comprising at least one first plate or container, such as a multi-well platform, a second platform to hold the first plate or container, and a detector. A system preferably includes a storage and retrieval module, a sample distribution module, a sample transporter and a reaction module.

Other chemistry terms herein are used according to conventional usage in the art, as exemplified by The McGraw-Hill Dictionary of Chemical Terms (ed. Parker, S., 1985), McGraw-Hill, San Francisco, incorporated herein by reference).

Barriers between an assay sample and another environment, such as a gaseous environment, have traditionally been mechanical, solid barriers, such as caps and covers for reaction containers, such as microtiter plates, microcentrifuge tubes, test tubes, and the like. In the course of miniaturizing and automating assay systems using, for example microtiter wells that contain at least biological components, such as a cell, the inventors recognized that when the volume of the assay sample was reduced, the effects of evaporation often became problematic. Mechanical barriers, while effectively reducing evaporation in an assay sample, were found to be problematic because automation procedures necessitate additional robotic components to remove, hold, and replace the mechanical barrier. In addition to necessitating additional robotics, the use of mechanical barriers typically can increase the rate at which the assay samples are contaminated.

While working to miniaturize and automate screening procedures that use multi-well platforms, such as microassay plates, the inventors of the present invention recognized the shortcommings of mechanical lids and set forth to develop a type of lid that would overcome these problems. The inventors realized that such a barrier would preferably be compatible with optical detection methods and instrumentation, such as absorbance and fluorescence, to detect an optical property of a sample. The inventors also noted that paraffin wax is not particularly compatible with living biological systems, such as cells in culture, especially when such cells are used to screen test chemicals for activity, such as biological or pharmaceutical activity. For example, paraffin wax is solid at incubation temperatures preferred by most cells in culture and does not permit the appreciable transfer of respiratory gases or other reagents through the barrier into the assay sample. Mineral oil, while being liquid at incubation temperatures and sometimes tolerated by most cells, does not, however, readily or reproducibly allow the passage of dispensed liquid reagents through the liquid barrier. Thus, these non-mechanical barriers are not well suited for assaying samples comprising, for example, cells or portions thereof, unless specifically adapted as described herein. Such samples include, for example cells, cell extracts, receptors, purified enzymes and the like that can be used in biochemical or cell based assays to identify test compounds that can modulate biological processes such as cellular processes, gene expression, or enzyme activity.

As a non-limiting introduction to the breadth of the invention, the invention includes several general and useful aspects, including:

1) A composition comprising a sample, and a liquid barrier, wherein the liquid barrier can reduce evaporation of a sample. The liquid barrier can typically allow the exchange of gases, such as oxygen and carbon dioxide, between the sample and the atmosphere, which can allow for cellular respiration. Furthermore, the liquid barrier can have

low fluorescence and not substantially interfere with at least one optical property of the sample (such as absorbance, transmittance or fluorescence), allowing for fluorescence and optical detection methods to be used with the sample. Preferably, the liquid barrier does not substantially interfere with other detection methods, including, for example, radioactivity, or PCR. In addition the liquid barrier is preferably capable of being automatically dispensed in microliter volumes or less and allow the passage of an aqueous sample through the liquid barrier into a sample below. The liquid barriers can provide additional benefits useful for testing samples and screening test chemicals for activity as described herein.

2) A method of making a liquid barrier, comprising the step of contacting a sample with a liquid barrier.

3) A system of spectroscopic measurements, comprising at least one reagent for an assay and a device, said device comprising a sample, a platform and a detector; wherein said sample comprises a liquid barrier.

4) A method for detecting the presence of an analyte in at least one sample comprising a liquid barrier.

5) A method for identifying a modulator or a therapeutic in at least one sample comprising a liquid barrier. This method can be used to screen libraries of test chemicals for modulator activity.

6) A chemical, modulator or therapeutic, or a library thereof, identified by at least one method of the present invention.

7) A method for testing a therapeutic or test chemical for therapeutic activity and toxicology by identifying a therapeutic using the method of 6), and monitoring the toxicology and efficacy of the therapeutic in *in vitro* or *in vivo* models.

8) A composition identified by the method of 5), 6) or 7) or combination thereof.

Several characteristics of the liquid barriers of the present invention are preferred and are easily measured or determined using well-known methods. Preferably, standard curves of these properties can be made to readily determine and compare these characteristics. In order to identify liquid barriers suitable for an intended use, such as cell culture, the skilled artisan need only take simple measurements and perform simple experiments to confirm that a chosen liquid barrier has the desired characteristics under a set of conditions, such as temperature and atmospheric composition (for example, partial pressure of oxygen and/or carbon dioxide) characteristic of such intended use. The liquid barrier of the present invention need not have all of the following characteristics, and can have at least one such characteristic and can have any combination thereof, where suitable. However, preferred liquid barriers of the present invention would possess at least two or three such characteristics, preferably at least four of such characteristics, and most preferably at least five or more or all of these characteristics.

The liquid barrier of the present invention preferably prevents the evaporation of a liquid sample. This characteristic can be evaluated by observing or measuring the rate of evaporation of a liquid sample in the presence and absence of a liquid barrier of the present invention over a given time period. Such a liquid sample can include living cells, whose viability can be monitored over time using well-known methods, such as using viability dyes or stains as they are known in the art, such as, for example, tetrazolium compounds. By preventing evaporation of liquid samples, the liquid barrier of the present invention can sustain the viability of such cells over time.

The liquid barrier of the present invention is preferably compatible with living cells. This characteristic can be evaluated by providing a sample that includes living cells whose viability can be monitored over a given time period using well-known methods, such as using viability dyes or stains as they are known in the art, such as, for example, tetrazolium compounds.

The liquid barrier of the present invention preferably allows the passage of gases, liquids (preferably aqueous solutions), cells or solids trough the liquid barrier under a set of assay or reaction conditions. Permeability of a liquid barrier to gases, such as respiratory gases, can be determined using well-known methods, such as measuring soluble gases in an aqueous phase covered with a liquid barrier, wherein a gaseous phase is present on the other side of the liquid barrier. Soluble gases can be measured using electrodes available in the art, such as oxygen electrodes. Preferably, the concentration of the gas being measured is greater on one side of the barrier than the other before and during the course of these measurements.

Permeability to solids, liquids (such as aqueous solutions), and cells under a set of assay conditions can be determined using well-known methods. For example, a liquid barrier can be observed for this property under a set of assay conditions by placing a sample, such as a liquid sample (optionally comprising at least one cell), on top of a liquid barrier and confirming that the sample passes through the liquid barrier. Preferably, samples such as aqueous solutions, can pass through a liquid barrier after being dispensed by dispensing devices such as aspirators, piezo dispensers and solenoid dispensers that are particularly adapted for ultra high throughput screening. Such dispensers can dispense samples at low or relatively high velocities.

Preferably, the liquid barrier of the present invention is permeable to small droplets of aqueous solution, such as those dispensed by piezo dispensers or solenoid dispensers. Such dispensers preferably dispense droplets between about 10 and about 1000 picoliters, preferably between about 100 and about 500 picoliters. The velocity of the droplets is preferably between about 0.1 meters/second and about 100 meters/second, more preferably between about 1

meter/second and about 10 meters/second. The dispensation time is preferably between about 0.01 milliseconds and about 10 milliseconds and more preferably between about 0.1 milliseconds and about 1 millisecond. Such droplets preferably substantially pass through a liquid barrier between about 0.01 mm and about 10 mm in thickness, preferably between about 0.1 mm and about 5 mm, from a distance between about 0.1 mm and about 100 mm, preferably between about 1 mm and about 10 mm. In this instance, "substantially pass" means greater than about 50% of the volume of the droplets (preferably greater than about 75%, and most preferably greater than about 90% or 95%) pass through a liquid barrier between about 0.5 mm and 1 mm in thickness and become part of an aqueous phase underneath the liquid barrier at 24°C at one atmosphere pressure in a glass tube having an inside diameter of 1.1 mm or a 0.5 ml Eppendorf tube (polypropylene).

The liquid barrier of the present invention is usually less dense than aqueous solutions so that the liquid barrier can form on top of an aqueous solution. A liquid barrier can, however, form on the bottom of a sample, such as an aqueous solution. By forming on the bottom of a sample, a liquid barrier of the present invention can prevent a sample from contacting an adjacent phase, object, or sample. Such liquid barriers that are more dense than an aqueous solution include halogenated hydrocarbons, such as freons, chlorinated hydrocarbons, fluorinated hydrocarbons, chlorinated and fluorinated hydrocarbons, or mixtures thereof. As such, a sample, such as an aqueous sample, can be located between two liquid barriers. These characteristics can be evaluated by measuring the density of a liquid barrier using well known methods or by empirical testing, preferably under conditions that the liquid barrier would be used, such as temperature and pressure.

Also, the liquid barrier of the present invention in some embodiments is preferably substantially optically clear (for example, does not substantially absorb visible, ultraviolet or infrared electromagnetic radiation) and is substantially non-fluorescent so that samples can be characterized by their optical and fluorescent properties without requiring additional sample manipulation steps, such as sample transfer. In this instance, substantially optically clear and substantially non-fluorescent mean that the optical and fluorescent properties of the liquid barrier do not decrease the signal-to-noise ratio (as determined by optical or fluorescent measurements) of an assay greater than 10-fold, preferably less than 1-fold, more preferably less than 50%, and most preferably less than 10%. The liquid barriers of the present invention can also increase the signal-to-noise ratio of such assays, preferably at least about 5%, more preferably at least about 10%, and most preferable at least about 20% or at least about 40%. Furthermore, the liquid barriers of the present invention can reduce the variability of the assay by reducing the standard deviation or CV (standard deviation/mean) by at least about 5%, preferably by at least about 10%, and most preferably by at least about 20% or at least about 30%. These optical characteristics can be evaluated by measuring various optical properties of liquid barriers such as refractive index and fluorescence using well-known methods (*see*, **Example 1**).

The liquid barrier of the present invention preferably has a refractive index at 25°C of between about 1.1 and 1.6, more preferably between 1.2 and 1.5, and most preferably between about 1.3 and 1.4. Silicone oil Dow Corning Silicone 200® (5cs) has a refractive index of about 1.3960 at 25°C. Also, the liquid barrier of the present invention preferably forms a flattened meniscus between an aqueous sample and the liquid barrier. For example, silicone oil (5cs) (Dow Corning Silicone 200®) can form a relatively flat meniscus between the liquid barrier and an aqueous sample as compared to the meniscus formed between light mineral oil (Fisher Scientific) and an aqueous sample. The shape of the meniscus can be affected by the size, shape and thickness of the liquid barrier. Without limiting the invention to any mechanism, the inventors postulate that one of mechanisms for the increased sensitivity and precision of the assays presented in **Example 1** is a change in the refractive index of the oil and/or the shape of the meniscus formed between the liquid barrier and an aqueous sample, such as an aqueous sample, which may allow light to reflect off of the interface or allow the liquid barrier to act as a lens.

In addition, the liquid barrier of the present invention can have a photon reducing property, a photon scattering property, a photon reflecting property or a combination thereof Such properties can be inherent or can be made by adding at least one photon reducing agent, at least one photon scattering agent, at least one photon reflecting agent, or a combination thereof, to a liquid barrier. For example, one or more dyes, such as hydrophobic dyes (for example carotenoids) that substantially partition into a liquid barrier can be added to a liquid barrier or be partitioned into a liquid barrier. Alternatively, particulate such as carbon black or metal filings (such as iron, tin or aluminum) that partition into or at least one interface of a liquid barrier can be added to the liquid barrier. These photon reducing, photon scattering or photon reflective properties can increase the sensitivity of an assay that uses an optical read-out by reducing unwanted optical background

The amount or concentration of such photon reducing agent, photon scattering agent or photon reflecting agent in or at a liquid barrier is preferably high enough to absorb, scatter or reflect photons that are incident to a liquid baffler or are emitted from a sample. As such, a liquid barrier comprising such photon reducing agent, photon scattering agent or photon reflecting agent can act as a filter or barrier to reduce the incidence or emission of at least one wavelength into or out of a sample comprising a liquid barrier, or to reduce background radiation. The benefits of such photon reducing agent, photon scattering agent and photon reflecting agent is to increase the sensitivity and accuracy of the assay by reducing unwanted photons being introduced or emitted from the sample. In one embodiment, the photon

reducing agent, photon scattering agent or photon reflecting agent would absorb excitation light and not substantially absorb light emitted from a sample.

The liquid barrier of the present invention can be used with any appropriate plate, platform or container, such as a multi-well platform. A signal produced in the sample, such as fluorescence or a chromagen, can be detected using any appropriate method or instrumentation known in the art or later developed. For example, fluorescence can be detected, optionally by a detector, by having the excitation light incident on the sample at any appropriate angle from above, below, or from the side of such plate or container. The emission light can be detected at any appropriate angle above, below, or from the side of the plate or container. Preferably, the incident light is from below the container, wherein the liquid barrier is at the top of the container, and the emission is detected from below the container using epifluorescence.

Other types of detection methods may be used, such as electrical, radioactive, optical, and electromagnetic methods. Background fluorescence can be reduced using photon reducing agents such as those described in U.S. Patent No. 4,680,275, to Wagner et al., issued 7/14/87, and the U.S. patent application No. 09/118,497, filed 7/17/98 to Zlokarnik et al., entitled "Photon Reducing Agents for Cellular Fluorescent Assays."Such photon reducing agents are preferably used when a photon producing agent is localized next to a solid support, such as the bottom of a container, such as a multi-well platform, and the emission from the photon producing agent is measured through the solid support. The emission can come from a membrane compartment (from the inside of the membrane compartment, from the membrane, or from a fluorescent compound attached to the membrane) or from a fluorescent moiety that is not associated with a membrane compartment. The emission of fluorescence or transmittance of light through a sample can be detected using any acceptable detector as known in the art, such as fluorometers or spectrometers as they are known in the art.

Furthermore, the liquid barrier of the present invention is preferably non-toxic and substantially inert to the components of the assay system, such as analyte(s) or dryware (such as membrane filters, plates, containers and platforms) so that the results obtained by the assay are not altered by the liquid barrier. This characteristic of the liquid barriers of the present invention can be important for samples comprising biological compositions, especially living cells, such as eukaryotic cells, especially when used in screening procedures or biological processes such as enzymatic reactions, specific binding reactions and PCR. The toxicity of a liquid barrier to cells, such as prokaryotic cells, eukaryotic cells, mammalian cells, and human cells, can be evaluated by determining the toxicity of the liquid barrier to cells using known methods, such as viability dyes, growth curves, or measuring the number of colony forming units using methods known in the art or later developed. The inertness of a liquid barrier to a component of an assay system, such as dryware or a test chemical, can be tested by contacting such components with a liquid barrier and determining whether the liquid barrier alters the function, or chemical or physical structure of the component using well known methods, such as mass spectroscopy, high pressure liquid chromatography (HPLC) nuclear magnetic resonance (NMR) or biological activity.

The liquid barriers of the present invention can preferably be used with living cells, cell extracts, or purified biological reagents, such as proteins, peptides, nucleic acids, lipids, carbohydrates, small organic or inorganic chemicals, or combinations thereof to perform biological, biochemical, cellular or specific binding reactions as they are known in the art or later developed. For example, the liquid barriers of the present invention can be used in specific binding reactions or specific binding assays using, for example, an enzyme that converts a substrate to a fluorophore or a chromophore or can be detected by chemiluminescence, as such methods and substrates are known in the art or are later developed (*see*, for example, U.S. Patent No. 4,680,275, to Wagner et al., issued 7/14/87; Harlow and Lane, Antibodies, A Laboratory Manual, Cold Spring Harbor Laboratory Press (1988); U.S. Patent No. 5,106,732, Kondo et al., issued 4/21/92). Alternatively, the liquid barriers of the present invention can be used to detect enzymes in a sample using, for example, a substrate for the enzyme that becomes a fluorophore or a chromophore or can be detected by chemiluminescence upon being acted upon by the enzyme, as such methods are known in the art (*see*, for example, U.S. Patent No. 5,116,732 to Brigati et al, issued 5/26/92; U.S. Patent No. 5,116,733 to Yamasaki, issued 5/26/92).

Also, the liquid barrier of the present invention is preferably compatible with living cells, such as prokaryotic or eukaryotic cells, such as mammalian cells, or other analytes, for a period of time sufficient to perform *in vitro* assays. Assay time can range between about greater than 30 minutes and greater than 72 hours, preferably between about 1 hour and 24 hours are considered representative. Shorter times, such as 1-60 seconds or less, can also be used in fast reactions. Such compatibility with living cells, such as mammalian cells, can be established using the methods set forth in **Example 3**, **Example 4, or Example 5**.

The liquid barrier of the present invention is preferably substantially non-volatile at 24°C at one atmosphere pressure as determined by established methods. Preferably, the liquid barrier of the present invention is less volatile than water or ethanol under standard temperature and pressure, and preferably is approximately as volatile or less volatile as mineral oil or silicone oil (Dow Corning 200® Fluid, 1.5cs, 2.0cs or 5cs, Dow Corning).

In addition, the liquid barrier of the present invention is preferably substantially non-soluble in aqueous solutions and non-aqueous solvents (such as DMSO) that are used in the assay procedures. Liquid barriers that are substantially soluble in aqueous solutions or non-aqueous solvents would tend to dissolve in the aqueous solution or a solvent when used under these circumstances. This characteristic should be avoided because the liquid barrier would tend to disperse and be ineffective. Substantially non-soluble, in this context, means less than about 75%, preferably less than about 20%, and most preferably less than about 1%. This characteristic of a liquid barrier can be determined using well-known methods, such as determining the solubility of liquid barriers in a variety of aqueous and organic solvents or mixtures thereof under conditions that are representative for the intended use of the liquid barrier.

Preferably, the liquid barrier can be dispensed accurately at between about 1 nanoliter and about 1 milliliter, more preferably between about 10 nanoliters to about 100 microliters, and most preferably between about 100 nanoliters to about 100 microliters. "Accurately," in this context, means with less than about 20%, preferably less than about 10% or about 5%, error as measured by standard deviation.

The liquid barriers of the present invention preferably can be accurately dispensed using a variety of dispensers, such as solenoids, piezos and capillaries as they are known in the art or later developed. Accurately, in this context, means with less than about 20%, preferably less than about 10% or about 5% error as measured by standard deviation.

Furthermore, the liquid barrier of the present invention is preferably of low viscosity, which promotes efficient dispensing of the liquid barrier, and the ability of reagents (such as, for example, solids, liquids, gases, cells, and mixtures thereof) to traverse through the liquid barrier. This properties of liquid barriers can be determined using simple methods, such as measuring the viscosity of liquid barriers. Liquid barriers of the present invention preferably have a viscosity between about 0.1 cs and about 100 cs, more preferably between about 1 cs and about 100 cs or between about 2 cs and about 30 cs, and most preferably between about 3 cs and about 10 cs.

Also, the liquid barrier of the present invention is preferably of a density less than that of water so that the liquid barrier forms above an aqueous solution. Preferred liquid barriers, such as silicone oil (Dow Corning 200® Fluid (1.5cs, 2.0cs and 5.0cs) have a specific gravity at 25°C between about 0.7 g/ml and about 0.95 g/ml, preferably between about 0.8 g/ml and about 0.92 g/ml (*see*, Information about Dow Corning Silicone Fluids (1993), and Dow Corning Material Safety Data Sheets for Dow Corning 200® Fluid (1.5cs, 2.0cs and 5.0cs)). Mineral oil (heavy) has a density of about 0.88 gm/ml and mineral oil (light) has a density of about 0.84 g/ml (*see*, Sigma Catalogue 1992 (Sigma Chemical Co., St. Louis, MO, especially page 684).

Also, the liquid barrier of the present invention preferably does not substantially partition assay reagents so that the components of the assay sample remain at a concentration effective in an assay. In screening assays, for example, some test chemicals are not particularly soluble in aqueous solutions. As such, organic solvents, such as DMSO, are used to solubilize test chemicals so that their effect on cells can be determined at a reasonable range of test chemical concentrations. An undesirable characteristic of a liquid barrier under these circumstances would be to solubilize components of culture media and such as test chemicals so that the concentration of test chemicals in the media is altered. This characteristic of liquid barriers can be determined using well-known methods, such as determining the solubility of various test chemicals in different carriers in liquid barriers and determining the ratio of the concentration of the test chemical in the liquid barrier and the sample under a set of assay conditions. A partition coefficient (PC) can be described as:

$$PC=\frac{\text{(concentration of test chemical in the liquid barrier)}}{\text{(concentration of test chemical in the sample)}}$$

Preferably, the PC of a test compound at 24°C and one atmosphere pressure is less than about 10 or about 1, more preferably between about $10^{-8}$ and about 10, between about $10^{-7}$ and about 1 or between about $10^{-6}$ and about $10^{-1}$, and most preferably between about $10^{-5}$ and about $10^{-2}$ or between about $10^{-4}$ and about $10^{-3}$. "Substantially partition," in this instance means that the PC of a test compound is between less than about 1 and less than about $10^{-1}$, preferably less than about $10^{-2}$, $10^{-3}$ or $10^{-4}$. The PC for oxonol (DISBAC$_2$(3)) in silicone oil (Dow Corning 200® Fluid, 5.0cs) and PBS at about 24°C at about one atmosphere pressure was determined to be about 0.019. The PC for oxonol (DISBAC$_2$(3)) in light mineral oil (Sigma Chemical Co., St. Louis Mo.) and PBS at about 24°C at about one atmosphere pressure was determined to be about 0. The PC for oxonol (DISBAC$_2$(3)) in octanol and PBS at about 24°C at about one atmosphere pressure was determined to be about 30.4. The PC values were determined by contacting oxonol with PBS (pH about 7.2) and the indicated oil or octanol and vigorously shaking the mixture. Oxonol concentration in the PBS or oil or octanol was determined by absorbance at 560 nm.

The liquid barriers of the present invention are preferably thin to allow the penetration of gases, liquids, cells and solids and combinations thereof through the liquid barrier. The inventors of the present invention appreciate that as the liquid barrier becomes thicker, it becomes more difficult for gases to pass through the liquid barrier and possibly for small droplets (having volumes of less than about 1 microliter or less than about 100 nanoliters, or less than about 10 nanoliter or less than about 5 or 1 nanoliter) to pass through the liquid barrier. The preferred thickness of a liquid barrier

can be expressed as the ratio of the volume of the liquid barrier to the volume of the sample in a substantially cylindrical container, such as the well of a multi-well platform. However, such calculations can be complicated by the presence of a meniscus at the interface between the liquid barrier and a liquid sample. The skilled artisan can take such an effect into account when considering the conditions (such as temperature) and the type of liquid sample and liquid barrier being used. In such a substantially cylindrical container, the ratio of the volume of the liquid barrier to the volume of the sample can be between about 5 and about 0.01, preferably between about 1 and about 0.05, and most preferably between about 0.8 and 0.1. In the alternative, the thickness of the liquid barrier can be measured directly using appropriate methods and instrumentation. Preferably, the thickness of the liquid barrier is between about 0.01 mm and about 5 mm, more preferably between about 0.1 mm and about 1 mm.

Liquid barriers are generally gas permeable physiologically compatible oils or emulsions as known in the art or later developed, such as those described by Zherg et al. (U.S. Patent No. 5,438,041), Beissiner et al., (U.S. Patent Nos. 5,061,688 and 5,217,648), Fox (U.S. Patent No. 5,229,163), Feil (U.S. Patent No. 4,722,904), Heldebrant et al. (U.S. Patent Nos. 4,769,241 and 4,919,895), Osterholm (U.S. Patent No. 4,795,423), Long (U.S. Patent No. 4,927,623), Kaufman et al., (U.S. Patent No. 5,171,755), Kim et al. (U.S. Patent No. 5,242,995), Graybill et al. (U.S. Patent No. 5,330,528), Fuhrman (U.S. Patent No. 5,437,272) and Clark (U.S. Patent Nos. 5,536,753 and 5,674,913).

Preferable liquid barrier materials are silicone oils, preferably linear polydimethylsiloxane polymers as are known in the art (*see*, Information About Dow Corning Silicone Fluids, Dow Corning (1993); Dow Corning Corporation Material Safety Data Sheet, Dow Corning 200® fluid, 5 CST, (January 1997)). Liquid barriers can include additional reagents, such as hemoglobin (U.S. Patent Nos. 5,438,041 (Zheng et al., issued August 1, 1995), 5,061,688 (Beissinger et al., issued October 29, 1991), 5,217,648 (Beissinger et al., issued June 8, 1993), and 5,229,163 (Clark, issued October 7, 1997)), or other gas carrying molecules, such as perfluorocarbons (U.S. Patent Nos. 4,722,904 (Feil, issued February 2, 1988), 4,769,241 (Heldebrant et al., issued September 6, 188), 4,795,423 (Osterholm, issued January 3, 1989), 4,919,895 (Heldebrant et al., April 24, 1990), 4,927,623 (Long, May 22, 1990), 5,171,755 (Kaufman et al., issued December 15, 1992), 5,242,995 (Kim et al., September 7, 1993), 5,300,528 (Graybill et al., April 5, 1994), 5,437,272 (Fuhrman, August 1, 1995), 5,536,753 (Clark, July 16, 1996) and 5,674,913 (Clark, October 7, 1997)). When present, hemoglobin or other gas carrying moieties in a liquid barrier can act as a "gas buffer" to maintain a concentration of a gas, such as oxygen, in a sample, such as an aqueous sample.

Although liquid barriers require little preparation before use, any material used in a liquid barrier can be sterilized prior to use by any appropriate method, such as by autoclaving, filtering, exposure to ethylene oxide, or other methods known in the art that are appropriate for a liquid barrier.

Liquid barriers that comprise multiple components can be prepared using methods known in the art, such as by mixing or emulsification. For example, liquid barriers that are emulsions can be made using emulsifiers and methods of emulsification as are known in the art. If desirable, liquid barriers that can carry gases can be "charged" with a particular gas by exposure to that gas by, for example, bubbling a gas, such as oxygen, through a liquid barrier.

The liquid barrier of the present invention can he made by adding a liquid barrier to a container that holds a sample. Preferably, the liquid barrier is dispensed using available dispensers useful in automation, such as solenoid or piezo dispensers. These dispensers can dispense droplets of less than one nanoliter of a liquid barrier in a single droplet. In the alternative, a liquid barrier can be placed in a container that does not hold a sample, then a sample can be added thereto. In the alternative, the sample or liquid barrier can be placed on a plate. The liquid barrier or sample can be added to a plate or container by any appropriate device or method known in the art or later developed to dispense liquids having the characteristics of a liquid barrier as used herein. The liquid barrier can be added to the plate or container in one or multiple steps. Preferably, the liquid barrier completely covers the sample on the plate or in the container, but this is not a requirement of the invention. The liquid barrier also preferably completely covers the sample on the plate or in the container, preferably contacting at least one sidewall of the container, preferably forming a seal between the sample and another phase, such as the atmosphere.

The liquid barriers of the present invention can be used with systems and methods that utilize automated and integratable workstations for identifying modulators, pathways, chemicals having useful activity and other methods described herein. Such systems are described generally in the art *(see*, U.S. Patent Nos: 4,000,976 to Kramer et al. (issued January 4, 1977), 5,104,621 to Pfost et al. (issued April 14, 1992), 5,125,748 to Bjornson et al. (issued June 30, 1992), 5,139,744 to Kowalski (issued August 18, 1992), 5,206,568 Bjornson et al. (issued April 27, 1993), 5,350,564 to Mazza et al. (September 27, 1994), 5,589,351 to Harootunian (issued December 31, 1996), and PCT Application Nos: WO 93/20612 to Baxter Deutschland GMBH (published October 14, 1993), WO 96/05488 to McNeil et al. (published February 22, 1996), PCT/US98/09526 to Stylli et al. (filed May 14, 1998) and WO 93/13423 to Agong et al. (published July 8, 1993).

The liquid barriers of the present invention can be used with a system for spectroscopic measurement, comprising: a reagent for an assay, and a device comprising at least one plate or container, preferably a multi-well platform, and a second platform to hold said plate or container for detecting a signal from a sample, wherein a liquid barrier is present on the plate or in the container. The system can further comprise a detector, such as a detector appropriate for

detecting a signal from a sample on a plate on in a container as such detectors are known in the art or are later developed. The system can comprise multiple plates or containers or multi-well platforms. In this context, a reagent for an assay includes any reagent useful to perform biochemical or biological *in vitro* or *in vivo* testing procedures, such as, for example, buffers, proteins, carbohydrates, lipids, nucleic acids, active fragments thereof, organic solvents such as DMSO, chemicals, analytes, therapeutics, compositions, cells, antibodies, ligands, and the like. In this context, an active fragment is a portion of a reagent that has substantially the activity of the parent reagent. The choice of a reagent depends on the type of assay to be performed. For example, an immunoassay would include an immuno-reagent, such as an antibody, or an active fragment thereof.

The liquid barrier of the present invention can be used with systems and methods that utilize automated and integratable workstations for detecting the presence of an analyte and identifying modulators or chemicals having useful activity. The liquid barrier of the present invention is also directed to chemical entities and information (e.g., modulators or chemical or biological activities of chemicals) generated or discovered by operation of workstations that incorporate the present invention.

The liquid barrier of the present invention can also be used with automated workstations that are programmably controlled to minimize processing times at each workstation and that can be integrated to minimize the processing time of the liquid samples from the start to finish of the process. Typically, such a system includes: A) a storage and retrieval module comprising storage locations for storing a plurality of chemicals in solution in addressable chemical wells, a chemical well retriever and having programmable selection and retrieval of the addressable chemical wells and having a storage capacity for at least 100,000 addressable wells, B) a sample distribution module comprising a liquid handler to aspirate or dispense solutions selected from the addressable chemical wells, the chemical distribution module having programmable selection of, and aspiration from, the selected addressable chemical wells and programmable dispensation into selected addressable sample wells (including dispensation into arrays of addressable wells with different densities of addressable wells per centimeter squared) or at locations, preferably pre-selected, on a plate, C) a sample transporter to transport the selected addressable chemical wells to the sample distribution module and optionally having programmable control of transport of the selected addressable chemical wells or locations on a plate (including adaptive routing and parallel processing), D) a reaction module comprising either a reagent dispenser to dispense reagents into the selected addressable sample wells or locations on a plate or a fluorescent detector to detect chemical reactions in the selected addressable sample wells or locations on a plate, and a data processing and integration module.

The storage and retrieval module, the sample distribution module, and the reaction module are integrated and programmably controlled by the data processing and integration module. The storage and retrieval module, the sample distribution module, the sample transporter, the reaction module and the data processing and integration module are operably linked to facilitate rapid processing of the addressable sample wells or locations on a plate. Typically, devices of the invention can process at least 100,000 addressable wells or locations on a plate in 24 hours. This type of system is described in PCT/US98/09526 to Stylli et al., filed May 14, 1998, entitled "Systems and method for rapidly identifying useful chemicals in liquid samples."

If desired, each separate module is integrated and programmably controlled to facilitate the rapid processing of liquid samples, as well as being operably linked to facilitate the rapid processing of liquid samples. In one embodiment the invention provides for a reaction module that is a fluorescence detector to monitor fluorescence. The fluorescence detector is integrated to other workstations with the data processing and integration module and operably linked with the sample transporter. Preferably, the fluorescence detector is of the type described herein and can be used for epi-fluorescence. Other fluorescence detectors that are compatible with the data processing and integration module and the sample transporter, if operable linkage to the sample transporter is desired, can be used as known in the art or developed in the future. For some embodiments of the invention, particularly for plates with 96, 192, 384 and 864 wells per plate, detectors are available for integration into the system. Such detectors are described in U.S. Patent 5,589,351 (Harootunian), U.S. Patent 5,355,215 (Schroeder), U.S. Patent Application (serial number pending), entitled "Detector and Screening Device for Ion Channels" filed 7/17/98, and PCT patent application WO 93/13423 (Akong). Alternatively, an entire plate may be "read" using an imager, such as a Molecular Dynamics Fluor-Imager 595 (Sunnyvale, CA). Multi-well platforms having greater than 864 wells, including 3,456 wells, can also be used in the present invention (*see*, for example, PCT Application PCT/US98/11061, filed 6/2/98.

The detector can comprise a control unit that can control, for example, the time and sequence that a sample is read. The control unit can comprise, for example, computer hardware, computer software and databases as they are known in the art. The detector can comprise a medium, such as a magnetic medium, that stores computer software, data or databases. The medium that stores computer software, data or databases can be provided separately from the detector or control unit. The control unit can store data and perform mathematical functions such as comparing the read-out from samples to determine concentration, presence or activity of, for example, an analyte, test chemical or modulator.

It is recognized that the present invention can be used with different types of fluorescent monitoring systems

and different fluorescent probes, such as fluorescent dyes, compounds or substrates. Preferably, systems dedicated to high throughput screening, e.g., 96-well or greater multi-well platforms, are used. Methods of performing assays on fluorescent materials are well known in the art and are described in, e.g., Lakowicz, J.R., *Principles of Fluorescence Spectroscopy*, New York: Plenum Press (1983); Herman, B., Resonance Energy Transfer Microscopy, in: *Fluorescence Microscopy of Living Cells in Culture, Part B, Methods in Cell Biology*, vol. 30, ed. Taylor, D.L. & Wang, Y.-L., San Diego: Academic Press (1989), pp. 219-243; Turro, N.J., *Modern Molecular Photochemistry*, Menlo Park: Benjamin/Cummings Publishing Col, Inc. (1978), pp. 296-361 and the Molecular Probes Catalog (1997), OR, USA.

Fluorescence in a sample can be measured using a detector described herein or known in the art for multi-well platforms. In general, excitation radiation from an excitation source having a first wavelength, passes through excitation optics. The excitation optics cause the excitation radiation to excite the sample. In response, fluorescent probes in the sample emit radiation that has a wavelength that is different from the excitation wavelength. Collection optics then collect the emission from the sample. The device can include a temperature controller to maintain the sample at a specific temperature while it is being scanned. According to one embodiment, a multi-axis translation stage (e.g., a dedicated X,Y positioner) moves a multi-well platform holding a plurality of samples in order to position different wells to be exposed. The multi-axis translation stage, temperature controller, auto-focusing feature, and electronics associated with imaging and data collection can be managed by an appropriately programmed digital computer. The computer also can transform the data collected during the assay into another format for presentation.

Preferably, FRET (fluorescence resonance energy transfer) is used as a way of monitoring probes in a sample (cellular or biochemical). The degree of FRET can be determined by any spectral or fluorescence lifetime characteristic of the excited construct, for example, by determining the intensity of the fluorescent signal from the donor, the intensity of fluorescent signal from the acceptor, the ratio of the fluorescence amplitudes near the acceptor's emission maxima to the fluorescence amplitudes near the donor's emission maximum, or the excited state lifetime of the donor. For example, cleavage of the linker increases the intensity of fluorescence from the donor, decreases the intensity of fluorescence from the acceptor, decreases the ratio of fluorescence amplitudes from the acceptor to that from the donor, and increases the excited state lifetime of the donor (*see*, for example, U.S. Patent No. 5,741,657 to Tsien et al., issued 4/21/98; WO 96/30540 to Tsien et al., published 10/3/9; WO 97/28261 to Tsien et al., published 8/7/97).

Preferably, changes in signal are determined as the ratio of fluorescence at two different emission wavelengths, a process referred to as "ratioing." Differences in the absolute amount of probe (or substrate), cells, excitation intensity, and turbidity or other background absorbances between addressable wells can affect the fluorescence signal. Therefore, the ratio of the two emission intensities is a more robust and preferred measure of activity than emission intensity alone.

A ratiometric fluorescent probe system can be used with the invention. For instance the reporter system described in PCT publication WO96/30540 (Tsien and Zolkarnik, published October 3, 1996) has significant advantages over existing reporters for gene integration analysis, as it allows sensitive detection and isolation of both expressing and non-expressing single living cells. This assay system uses a non-toxic, non-polar fluorescent substrate that is easily loaded and then trapped intracellularly. Cleavage of the fluorescent substrate by beta-lactamase yields a fluorescent emission shift as substrate is converted to product. Because the beta-lactamase reporter readout is ratiometric, it is unique among reporter gene assays in that it controls variables such as the amount of substrate loaded into individual cells. The stable, easily detected, intracellular readout simplifies assay procedures by eliminating the need for washing steps, which facilitates screening with cells using the invention.

The liquid barriers of the present invention can be used in any method that uses targets for detecting the presence of an analyte, such as chemicals that are useful in modulating the activity of a target, in a sample. Typically, as discussed below, targets can be proteins such as cell surface proteins or enzymes. A biological process or a target can be assayed in biochemical assays (targets free of cells, such as, for example, ligands, nucleic acids, proteins, enzymes, peptide, carbohydrates, lipids, small organic or inorganic molecules, or combinations thereof), or cell based assays (targets associated with a cell such as a prokaryotic or eukaryotic cells, including mammalian cells such as human cells).

An example of such a method comprises the steps of: exciting at least one sample on a plate or in a container (such as at least one well of a multi-well platform) comprising a liquid barrier with radiation of a first wavelength, wherein the at least one sample suspected of containing an analyte is placed onto a plate or into a container (or at least one well of a multi-well platform). The sample and biological process or target can be contacted with the plate or container, or not in contact with the plate or container and later placed on the plate or in the container. The emission of radiation of a second wavelength emitted from the sample is measured, wherein the amount of radiation of a second wavelength measured indicates the presence or absence of the analyte in the sample. Preferably, the results are compared with an appropriate control.

Another example of such a method comprises the steps of: exciting at least one sample on a plate or in a container comprising a liquid barrier with radiation of a first wavelength, wherein the at least one sample suspected of containing an analyte is placed onto a plate or into a container (or at least one well of a multi-well platform). The sample

and biological process or target can be contacted on the plate or within the container, or not in contact with the plate or container, and later placed on the plate or within the container. An optical property of the sample, such as the transmittance or absorbance of radiation of the first wavelength by or through the sample, is measured, wherein the amount of transmittance or absorbance of the first wavelength measured indicates the presence or absence of the analyte in the sample. Preferably, the results are compared with an appropriate control.

The liquid barriers of the present invention can be used in analyte-anti-analyte assays to detect the presence of an analyte in a sample. In these methods, an anti-analyte or an analyte can be any anti-analyte-analyte pair, as this term is understood in the art, including a binding pair. Anti-analyte-analyte pairs include for example, receptor-ligand pairs, antibody-antigen pairs, nucleic acid hybridization pairs, nucleic acid-protein pairs, or combinations thereof as are known in the art. Anti-analytes and analytes include, for example, receptors, ligands, immunogloblins of any class or subclass, an active fragment of any of the above, chemicals, drugs, toxins, biological material such as proteins, polypeptides, peptides, carbohydrates, lipids, nucleic acids such as DNA or RNA, or combinations thereof. An anti-analyte or analyte can be associated with a membrane compartment, such as being on the surface of a membrane compartment, such as the external surface of the membrane compartment.

In these methods, the anti-analyte or analyte can be in contact with a solid surface or be free in solution. The solid surface can be a plate or container used in an assay, such as a vial or at least one well of a microtiter plate. Preferably, the solid surface is the bottom of a well of a microtiter plate, wherein the bottom has at least a portion that can transmit light of a wavelength used in an assay. Analytes or anti-analytes can be bound to solid surfaces by a variety of means, such as through gluteraldehyde cross-linking, electrostatic absorption, passive absorption, or covalent linkage (*see*, for example, Harlow, Antibodies, Cold Spring Harbor Press, Cold Spring Harbor, 1988; and Sambrook et al., Molecular Cloning: A Laboratory Manual, Cold Spring Harbor Press. Cold Spring Harbor, 1989)). Furthermore, anti-analytes or analytes can be labeled with a photon producing agent, such as a fluorescent moiety, using methods known in the art (*see*, Harlow, supra. 1988; and Sambrook et al., supra, 1989).

The methods of the present invention can be used in any anti-analyte-analyte detection assay that uses a label. Such known assays are direct non-competitive assays (U.S. Patent Nos. 4,187,075 and 4,497,900), competitive binding (U.S. Patent Nos. 4,134,792; 3,654,090; 4,478,946; 4,092,408; 4,478,946; 4,371,140; 4,228,237; 4,490,473; 4,243,749; 4,298,685; 3,839,153; 4,048,298; and 4,271,140), sequential saturation (U.S. Patent Nos. 4,134,792; 4,271,140; and 4,048,298), displacement or release assay (U.S. Patent Nos. 4,120,945; 4,256,725; and 4,388,295), homogeneous assays (U.S. Patent No. 4,680,275), one-site immunometric (U.S. Patent Nos. 4,134,792; 3,654,090; 4,134,792; 3,850,752; 4,670,383; 4,332,495; 4,034,074; 4,434,236; EP No. 177,191; and GB 2,084,317), and sandwich assays (U.S. Patent Nos. 4,134,792; 4,376,110; 4,478,946; 4,271,140; 4,034,074; 4,474,892; 4,230,683; 4,228,683; 4,228,237; 4,098,876; 4,376,110; 4,486,530; 4,376,110; 4,486,530; 4,271,140; and 4,343,896), nucleic acid hybridization (Sambrook et al., Molecular Cloning: A Laboratory Manual, Cold Spring Harbor Press (1989)) or any other such method known in the art or later developed.

The liquid barrier of the present invention can be used in enzyme assays to detect an analyte in a sample as such assays are known in the art or later developed. Generally, a sample suspected of containing an analyte, such as an enzyme, is provided on a plate or in a container, such as at least one well of a multi-well platform, and contacted with a liquid barrier and substrate that is preferably converted by the enzyme into a detectable product, for example, a chromogen, fluorophore or a compound that can be detected by chemiluminescence. The enzyme, if present, converts the substrate to a detectable product. The amount of detectable product measured correlates with the amount of the enzyme in the sample. Preferably, the amount of detectable product measured is compared with an appropriate control. Such methods can be used to detect inhibitors of biological processes using competitive, agonist, or antagonist assay formats, or any other assay format known in the art or later developed. *See* generally, U.S. Patent No. 5,091,307 to Escarguel et al., issued February 25; 1992, U.S. Patent No. 5,098,830 to Bar-or et al., issued March 24, 1992, U.S. Patent No. 5,116,732 to Brigati et al., issued May 26, 1992, U.S. Patent No. 5,116,733 to Yamasaki, issued May 26, 1992, U.S. Patent No. 5,124,254 to Hwelins et al., issued June 23, 1992, U.S. Patent No. 5,192,666 to Ikenaka et al., issued March 9, 1993, U.S, Patent No. 5,235,039 to Heath et al., issued August 10, 1993, U.S. Patent No. 5,279,935 to Zycz, issued January 18, 1994, and U.S. Patent No. 5,340,722 to Wolfbeis et al., issued August 23, 1994.

Targets can be membrane compartments, such as cells, which may be loaded with ion or voltage sensitive dyes to report receptor or ion channel activity, such as calcium channels or N-methyl-D-aspartate (NMDA) receptors, GABA receptors, kainate/AMPA receptors, nicotinic acetylcholine receptors, sodium channels, calcium channels, potassium channels excitatory amino acid (EAA) receptors, nicotinic acetylcholine receptors. Assays for determining activity of such receptors can also use agonists and antagonists to use as negative or positive controls to assess activity of tested chemicals. In preferred embodiments of automated assays for identifying chemicals that have the capacity to modulate the function of receptors or ion channels (e.g., agonists, antagonists), changes in the level of ions in the cytoplasm or membrane voltage will be monitored using an ion-sensitive or membrane voltage fluorescent indicator, respectively. Among the ion-sensitive indicators and voltage probes that may be employed, are those disclosed in the Molecular Probes 1997 Catalog, U.S. Patent No. 5,661,035 to Tsien et al, issued 8/26/97; and WO 96/41166, published

12/19/96.

Other methods of the present invention concern determining the activity of receptors. Receptor activation can sometimes initiate subsequent intracellular events that release intracellular stores of calcium ions for use as a second messenger. Activation of some G-protein-coupled receptors stimulates the formation of inositol triphosphate (IP3 a G-protein coupled receptor second messenger) through phospholipase C- mediated hydrolysis of phosphatidylinositol, Berridge and Irvine (1984), Nature 312: 315-21. IP3 in turn stimulates the release of intracellular calcium ion stores. Thus, a change in cytoplasmic calcium ion levels caused by release of calcium ions from intracellular stores can be used to reliably determine G-protein-coupled receptor function. Among G-protein-coupled receptors are muscarinic acetylcholine receptors (mAChR), adrenergic receptors, serotonin receptors, dopamine receptors, angiotensin receptors, adenosine receptors, bradykinin receptors, metabotropic excitatory amino acid receptors and the like. Cells expressing such G-protein-coupled receptors may exhibit increased cytoplasmic calcium levels as a result of contribution from both intracellular stores and via activation of ion channels, in which case it may be desirable, although not necessary, to conduct such assays in calcium-free buffer, optionally supplemented with a chelating agent such as EGTA, to distinguish fluorescence response resulting from calcium release from internal stores.

Other assays can involve determining the activity of receptors which, when activated, result in a change in the level of intracellular cyclic nucleotides, e.g., cAMP, cGMP. For example, activation of some dopamine, serotonin, metabotropic glutamate receptors and muscarinic acetylcholine receptors results in a decrease in the cAMP or cGMP levels of the cytoplasm. Furthermore, there are cyclic nucleotide-gated ion channels, e.g., rod photoreceptor cell channels and olfactory neuron channels (*see*, Altenhofen, W. et al. (1991) Proc. Natl. Acad. Sci U.S.A. 88: 9868-9872 and Dhallan et al. (1990) Nature 347: 184-187) that are permeable to cations upon activation by binding of cAMP or cGMP. In cases where activation of the receptor results in a decrease in cyclic nucleotide levels, it may be preferable to expose the cells to agents that increase intracellular cyclic nucleotide levels, e.g., forskolin, prior to adding a receptor-activating compound to the cells in the assay. Cells for this type of assay can be made by co-transfection of a host cell with DNA encoding a cyclic nucleotide-gated ion channel and DNA encoding a receptor (e.g., certain metabotropic glutamate receptors, muscarinic acetylcholine receptors, dopamine receptors, serotonin receptors, and the like), which, when activated, cause a change in cyclic nucleotide levels in the cytoplasm.

Any cell expressing a protein target in sufficient quantity for measurement in a cellular assay can be used with the invention. Cells endogenously expressing a protein can work as well as cells expressing a protein from heterologous nucleic acids. For example, cells may be transfected with a suitable vector encoding one or more such targets that are known to those of skill in the art or may be identified by those of skill in the art. Although essentially any cell which expresses endogenous ion channel or receptor activity may he used, when using receptors or channels as targets it is preferred to use cells transformed or transfected with heterologous DNAs encoding such ion channels and/or receptors so as to express predominantly a single type of ion channel or receptor. Many cells that can be genetically engineered to express a heterologous cell surface protein are known. Such cells include, but are not limited to, baby hamster kidney (BHK) cells (ATCC No. CCL 10), mouse L cells (ATCC No. CCLI.3), Jurkats (ATCC No. TIB 152) and 153 DG44 cells (*see*, Chasin (1986) Cell. Molec. Genet. 12: 555) human embryonic kidney (HEK) cells (ATCC No. CRL1573), Chinese hamster ovary (CHO) cells (ATCC Nos. CRL9618, CCL61, CRL9096), PC12 cells (ATCC No. CRL17.21) and COS-7 cells (ATCC No. CRL1651). Preferred cells for heterologous cell surface protein expression are those that can be readily and efficiently transfected. Preferred cells include Jurkat cells and HEK 293 cells, such as those described in U.S. Patent No. 5,024,939 and by Stillman et al. (1985) Mol. Cell. Biol. 5: 2051-2060.

Exemplary membrane proteins include, but are not limited to, surface receptors and ion channels. Surface receptors include, but are not limited to, muscarinic receptors, e.g., human M2 (GenBank accession #M16404); rat M3 (GenBank accession #M16407); human M4 (GenBank accession #M16405); human M5 (Bonner, et al., (1988) Neuron 1, pp. 403- 410); and the like. Neuronal nicotinic acetylcholine receptors include, but are not limited to, e.g., the human $\alpha_2$, $\alpha_3$, and $\beta_2$, subtypes disclosed in USSN 504,455 (filed April 3, 1990, which is hereby expressly incorporated by reference herein in its entirety); the human $\alpha_5$ subtype (Chini, et al. (1992) Proc. Natl. Acad. Sci. U.S.A. 89: 1572-1576). the rat $\alpha_2$ subunit (Wada, et al. (1988) Science 240, pp. 330-334); the rat $\alpha_3$ subunit (Boulter, et al. (1986) Nature 319, pp. 368-374); the rat $\alpha_4$ subunit (Goldman, et al. (1987) Cell 48, pp. 965-973); the rat $\alpha_5$ subunit (Boulter, et al. (1990) J. Biol. Chem. 265, pp. 4472-4482); the chicken $\alpha_7$ subunit (Couturier et al. (1990) Neuron 5: 847-856); the rat $\beta_2$ subunit (Deneris, et al. (1988) Neuron 1, pp. 45-54) the rat $\beta_3$ subunit (Deneris, et al. (1989) J. Biol. Chem. 264, pp. 6268-6272); the rat $\beta_4$ subunit (Duvoisin, et al. (1989) Neuron 3, pp. 487-496); combinations of the rat $\alpha$ subunits, $\beta$ subunits and a and p subunits; GABA receptors, e.g., the bovine n, and p, subunits (Schofield, et al. (1987) Nature 328, pp. 221-227); the bovine n, and a, subunits (Levitan, et al. (1988) Nature 335, pp. 76-79): the $\gamma$-subunit (Pritchett, et al. (1989) Nature 338, pp. 582-585); the p, and p, subunits (Ymer, et al. (1989) EMBO J. 8, pp. 1665-1670); the 6 subunit (Shivers, B.D. (1989) Neuron 3, pp. 327-337); and the like. Glutamate receptors include, but are not limited to, e.g., rat GluR1 receptor (Hollman, et al. (1989) Nature 342, pp. 643-648); rat GluR2 and GluR3 receptors (Boulter et al. (1990) Science 249:1033-1037; rat GluR4 receptor (Keinanen et al. (1990) Science 249: 556-560 ); rat GluR5 receptor (Bettler et al. (1990) Neuron 5: 583-595) g rat GluR6 receptor (Egebjerg et al. (1991) Nature 351: 745-748); rat GluR7 receptor (Bettler et al. (1992) neuron 8:257- 265); rat NMDAR1 receptor (Moriyoshi et al. (1991) Nature 354:31-37 and Sugihara et al. (1992) Biochem. Biophys. Res. Comm. 185:826-832); mouse NMDA el receptor (Meguro et al. (1992) Nature 357: 70-74); rat NMDAR2A, NMDAR2B and NMDAR2C receptors (Monyer et al. (1992) Science 256: 1217-1221); rat metabotropic mGluR1 receptor (Houamed et al. (1991) Science 252: 1318-1321); rat metabotropic mGluR2, mGluR3 and mGluR4 receptors (Tanabe et al. (1992) Neuron 8:169-179); rat metabotropic mGluR5 receptor (Abe et al. (1992) J. Biol. Chem. 267: 13361- 13368); and the like. Adrenergic receptors include, but are not limited to, e.g., human pl (Frielle, et al. (1987) Proc. Natl. Acad. Sci. 84, pp. 7920-7924); human $\alpha_2$ (Kobilka, et al. (1987) Science 238, pp. 650-656); hamster $\beta_2$ (Dixon, et al. (1986) Nature 321, pp. 75-79); and the like. Dopamine receptors include, but are not limited to, e.g., human D2 (Stormann, et al. (1990) Molec. Pharm. 37, pp. 1-6); mammalian dopamine D2 receptor (U.S. Patent No. 5,128,254); rat (Bunzow, et al. (1988) Nature 336, pp. 783-787); and the like. NGF receptors include, but are not limited to, e.g., human NGF receptors (Johnson, et al. (1986) Cell 47, pp. 545-554); and the like. Serotonin receptors include, but are not limited to, e.g., human 5HT1a (Kobilka, et al. (1987) Nature 329, pp. 75-79); serotonin 5HT1C receptor (U.S. Patent No. 4,985,352); human 5HT1D (U.S. Patent No. 5,155,218); rat 5HT2 (Julius, et al. (1990) PNAS 87, pp.928-932); rat 5HT1c (Julius, et al. (1988) Science 241, pp. 558-564); and the like.

Ion channels include, but are not limited to, calcium channels comprised of the human calcium channel $\alpha_2$, $\beta$ and/or $\gamma$-subunits disclosed in commonly owned United States Application Serial Nos. 07/745,206 and 07/868,354, filed August 15, 1991 and April 10, 1992, respectively, the contents of which are hereby incorporated by reference; (*see* also, WO89/09834; human neuronal $\alpha_2$ subunit); rabbit skeletal muscle al subunit (Tanabe, et al. (1987) Nature 328, pp. 313-E318); rabbit skeletal muscle $\alpha_2$ subunit (Ellis, et al. (1988) Science 241, pp. 1661-1664): rabbit skeletal muscle p subunit (Ruth, et al. (1989) Science 245, pp. 1115-1118): rabbit skeletal muscle $\gamma$ subunit (Jay, et al. (1990) Science 248, pp. 490-492); and the like. Potassium ion channels include, but are not limited to, e.g., rat brain (BK2) (McKinnon, D. (1989) J. Biol Chem. 264, pp. 9230-8236); mouse brain (BK1) (Tempel, et al. (1988) Nature 332, pp. 837-839); and the like. Sodium ion channels include, but are not-limited to, e.g., rat brain I and II (Noda, et al. (1986) Nature 320, pp. 188-192); rat brain III (Kayano, et al. (1988) FEBS Lett. 228, pp. 187-1.94); human II (ATCC No. 59742, 59743 and Genomics 5: 204-208 (1989); chloride ion channels (Thiemann, et al. (1992), Nature 356, pp. 57-60 and Paulmichl, et al. (1992) Nature 356, pp. 238-241), and others known or developed in the art.

Intracellular receptors may also be used as targets, such as estrogen receptors, glucocorticoid receptors, androgen receptors, progesterone receptors, and mineralocorticoid receptors, in the invention. Transcription factors and kinases can also be used as targets, as well as plant targets.

Various methods of identifying activity of chemical with respect to a target can be applied, including: ion channels (PCT publication WO 93/13423), intracellular receptors (PCT publication WO 96/41013), U.S. Patent 5,548,063, U.S. Patent 5,171,671, U.S. Patent 5,274,077, U.S. Patent 4,981,784, EP 0 540 065 A1, U.S. Patent 5,071,773, and U.S. Patent 5,298,429. All of the foregoing references are herein incorporated by reference in their entirety.

If the analyte is present in the sample, then the target will exhibit increased or decreased fluorescence. Such fluorescence can be detected using the methods of the present invention by exciting the sample with radiation of a first wavelength, which excites a fluorescent reporter in the sample, which emits radiation of a second wavelength, which can be detected. The amount of the emission is measured, and compared to proper control or background values. The amount of emitted radiation that differs from the background and control levels, either increased or decreased, correlates with the amount or potency of the analyte in the sample. Standard curves can be determined to make the assay more quantitative.

The liquid barrier of the present invention can also be used for testing a therapeutic for therapeutic activity and toxicology. A therapeutic is identified by contacting a test chemical suspected of having a modulating activity of a biological process or target with a biological process or target on a plate or in a container, such as at least one well of a multi-well platform, that comprises a liquid barrier using the methods of the present invention. The test chemical can be part of a library of test chemicals that is screened for activity, such as biological activity. The library can have individual members that are tested individually or in combination, or the library can be a combination of individual members. Such libraries can have at least two members, preferably greater than about 100 members or greater than about 1,000 members, more preferably greater than about 10,000 members, and most preferably greater than about 100,000 or 1,000,000 members. If the sample contains a modulator, then the amount of a reporter product in the sample, such as inside or outside of the cell, will either increase or decrease relative to background or control levels. The amount of the reporter product is measured using an appropriate method and instrumentation, such as fluorescence, absorbance or transmittance. For example, a fluorescent gene product (such as green fluorescent protein) or the fluorescent product of a reporter gene product (such as CCF2 and beta-lactamase) can be detected by exciting the fluorescent reporter product with an appropriate radiation of a first wavelength and measuring the emission of radiation of a second wavelength emitted from the sample. The amount of emission is preferably compared to background or control levels of emission. If the sample having the test chemical exhibits increased or decreased emission relative to that of the control or background levels, then a candidate modulator has been identified. The amount of emission is related to the amount

or potency of the therapeutic in the sample. Such methods are described in, for example, Tsien et al. (U.S. Patent No. 5,741,657, issued 4/21/98) and Whitney et al. (WO 98/13353, published 4/2/98). The candidate modulator can be further characterized and monitored for structure, potency, toxicology, and pharmacology using well-known methods.

The structure of a candidate modulator identified by the invention can be determined or confirmed by methods known in the art, such as mass spectroscopy. For putative modulators stored for extended periods of time, the structure, activity, and potency of the putative modulator can be confirmed.

Depending on the system used to identify a candidate modulator, the candidate modulator will have putative pharmacological activity. For example, if the candidate modulator is found to inhibit T-cell proliferation (activation) *in vitro*, then the candidate modulator would have presumptive pharmacological properties as an immunosuppressant or anti-inflammatory (*see*, Suthanthiran et al., Am. J. Kidney Disease, 28:159-172 (1996)). Such nexuses are known in the art for several disease states, and more are expected to be discovered over time. Based on such nexuses, appropriate confirmatory *in vitro* and *in vivo* models of pharmacological activity, as well as toxicology, can be selected. The methods described herein can also be used to assess pharmacological selectivity and specificity, and toxicity.

Depending on the system used to identify candidate modulators, a candidate modulator can have putative pharmacological activity. For example, if the candidate modulator is found to inhibit T-cell proliferation (activation) *in vitro*, then the candidate modulator would have presumptive pharmacological properties as an immunosuppressant or anti-inflammatory (*see*, Suthanthiran et al., Am. J. Kidney Disease, 28:159-172 (1996)). Such nexuses are known in the art for several disease states, and more are expected to be discovered over time. Based on such nexuses, appropriate confirmatory *in vitro* and *in vivo* models of pharmacological activity, as well as toxicology, can be selected. The methods described herein can also be used to assess pharmacological selectivity and specificity, and toxicity.

Once identified, candidate modulators can be evaluated for bioavailability and toxicological effects using known methods (*see*, Lu, Basic Toxicology, Fundamentals, Target Organs, and Risk Assessment, Hemisphere Publishing Corp., Washington (1985); U.S. Patent Nos: 5,196,313 to Culbreth (issued March 23, 1993) and U.S. Patent No. 5,567,952 to Benet (issued October 22, 1996). For example, toxicology of a candidate modulator can be established by determining *in vitro* toxicity towards a cell line, such as a mammalian i.e. human, cell line. Candidate modulators can be treated with, for example, tissue extracts, such as preparations of liver, such as microsomal preparations, to determine increased or decreased toxicological properties of the chemical after being metabolized by a whole organism. The results of these types of studies are often predictive of toxicological properties of chemicals in animals, such as mammals, including humans.

Such bioavailability and toxicological methods can be performed using the methods, preferably using the screening systems of the present invention. Such methods include contacting a sample having a target with at least one photon producing agent, at least one photon reducing agent, and a test chemical. An optical signal from said at least one photon producing agent is detected, wherein said optical signal is related to a toxicological activity. Bioavailability is any known in the art and can be detected, for example by measuring reporter genes that are activated during bioavailability criteria. Toxicological activity is any known in the art, such as apoptosis, cell lysis, crenation, cell death and the like. The toxicological activity can be measured using reporter genes that are activated during toxicological activity or by cell lysis (*see* WO 98/13353, published 4/2/98). Preferred reporter genes produce a fluorescent or luminescent translational product (such as, for example, a Green Fluorescent Protein (*see*, for example, U.S. Patent No. 5,625,048 to Tsien et al., issued 4/29/98; U.S. Patent No. 5,777,079 to Tsien et al.. issued 7/7/98; WO 96/23810 to Tsien, published 8/8/96; WO 97/28261, published 8/7/97; PCT/US97/12410, filed 7/16/97; PCT/US97/14595, filed 8/15/97)) or a translational product that can produce a fluorescent or luminescent product (such as, for example, beta-lactamase (*see*, for example, U.S. Patent No. 5,741,657 to Tsien, issued 4/21/98, and WO 96/30540, published 10/3/96)), such as an enzymatic degradation product. Cell lysis can be detected in the present invention as a reduction in a fluorescence signal from at least one photon-producing agent within a cell in the presence of at least one photon reducing agent. Such toxicological determinations can be made using prokaryotic or eukaryotic cells, optionally using toxicological profiling, such as described in PCT/US94/00583, filed 1/21/94 (WO 94/17208), German Patent No 69406772.5-08, issued 11/25/97; EPC 0680517, issued 11/12/94; U.S. Patent No. 5,589,337, issued 12/31/96: EPO 651825, issued 1/14/98; and U.S. Patent No. 5,585,232, issued 12/17/96).

Alternatively, or in addition to these *in vitro* studies, the bioavailability and toxicological properties of a candidate modulator in an animal model, such as mice, rats, rabbits, or monkeys, can be determined using established methods (*see*. Lu, supra (1985); and Creasey, Drug Disposition in Humans, The Basis of Clinical Pharmacology, Oxford University Press, Oxford (1979), Osweiler, Toxicology, Williams and Wilkins, Baltimore, MD (1995), Yang, Toxicology of Chemical Mixtures; Case Studies, Mechanisms, and Novel Approaches, Academic Press, Inc., San Diego, CA (1994), Burrell et al., Toxicology of the Immune System; A Human Approach, Van Nostrand Reinhld, Co. (1997), Niesink et al., Toxicology; Principles and Applications, CRC Press, Boca Raton, FL (1996)). Depending on the toxicity, target organ, tissue, locus, and presumptive mechanism of the candidate modulator, the skilled artisan would not be burdened to determine appropriate doses, $LD_{50}$ values, routes of administration, and regimes that would be appropriate to determine the toxicological properties of the candidate modulator. In addition to animal models, human clinical trials can be

performed following established procedures, such as those set forth by the United States Food and Drug Administration (USFDA) or equivalents of other governments. These toxicity studies provide the basis for determining the efficacy of a candidate modulator *in vivo*.

Efficacy of a candidate modulator can be established using several art recognized methods, such as *in vitro* methods, animal models, or human clinical trials (*see*, Creasey, supra (1979)). Recognized *in vitro* models exist for several diseases or conditions. For example, the ability of a chemical to extend the life-span of HIV-infected cells *in vitro* is recognized as an acceptable model to identify chemicals expected to be efficacious to treat HIV infection or AIDS (*see*, Daluge et al., Antimicro. Agents Chemother. 41:1082-1093 (1995)). Furthermore, the ability of cyclosporin A (CsA) to prevent proliferation of T-cells *in vitro* has been established as an acceptable model to identify chemicals expected to be efficacious as immunosuppressants (*see*, Suthanthiran et al., supra, (1996)). For nearly every class of therapeutic, disease, or condition, an acceptable *in vitro* or animal model is available. Such models exist, for example, for gastro-intestinal disorders, cancers, cardiology, neurobiology, and immunology. In addition, these *in vitro* methods can use tissue extracts, such as preparations of liver, such as microsomal preparations, to provide a reliable indication of the effects of metabolism on the candidate modulator. Similarly, acceptable animal models may be used to establish efficacy of chemicals to treat various diseases or conditions. For example, the rabbit knee is an accepted model for testing chemicals for efficacy in treating arthritis (*see*, Shaw and Lacy, J. Bone Joint Surg. (Br) 55:197-205 (1973)). Hydrocortisone, which is approved for use in humans to treat arthritis, is efficacious in this model which confirms the validity of this model (*see*, McDonough, Phys. Ther. 62:835-839 (1982)). When choosing an appropriate model to determine efficacy of a candidate modulator, the skilled artisan can be guided by the state of the art to choose an appropriate model, dose, and route of administration, regime, and endpoint and as such would not be unduly burdened

In addition to animal models, human clinical trials can be used to determine the efficacy of a candidate modulator in humans. The USFDA, or equivalent governmental agencies, have established procedures for such studies (*see*, www.fda.gov).

The *in vitro* and *in vivo* methods described above also establish the selectivity of a candidate modulator. It is recognized that chemicals can modulate a wide variety of biological processes or be selective. Panels of cells based on the present invention can be used to determine the specificity of the candidate modulator. Selectivity is evident, for example, in the field of chemotherapy, where the selectivity of a chemical to be toxic towards cancerous cells, but not towards non-cancerous cells, is obviously desirable. Selective modulators are preferable because they have fewer side effects in the clinical setting. The selectivity of a candidate modulator can be established *in vitro* by testing the toxicity and effect of a candidate modulator on a plurality of cell lines that exhibit a variety of cellular pathways and sensitivities. The data obtained from these *in vitro* toxicity studies can be extended into *in vivo* animal model studies, including human clinical trials, to determine toxicity, efficacy, and selectivity of the candidate modulator suing art-recognized methods.

The invention includes compositions, such as novel chemicals, and therapeutics identified by at least one method of the present invention as having activity by the operation of methods, systems or components described herein. Novel chemicals, as used herein, do not include chemicals already publicly known in the art as of the filing date of this application. Typically, a chemical would be identified as having activity from using the invention and then its structure revealed from a proprietary database of chemical structures or determined using analytical techniques such as mass spectroscopy.

One embodiment of the invention is a chemical with useful activity, comprising a chemical identified by the method described above. Such compositions include small organic molecules, nucleic acids, peptides and other molecules readily synthesized by techniques available in the art and developed in the future. For example, the following combinatorial compounds are suitable for screening: peptoids (PCT Publication No. WO 91/19735, 26 Dec. 1991), encoded peptides (PCT Publication No. WO 93/20242, 14 Oct. 1993), random bio-oligomers (PCT Publication WO 92/00091, 9 Jan. 1992), benzodiazepines (U.S. Pat. No. 5,288,514), diversomeres such as hydantoins, benzodiazepines and dipeptides (Hobbs De Witt, S. et al., Proc. Nat. Acad. Sci. USA 90: 6909-6913 (1993)), vinylogous polypeptides (Hagihara et al., J. Amer. Chem. Soc. 114: 6568 (1992)), nonpeptidal peptidomimetics with a Beta-D-Glucose scaffolding (Hirschmann, R. et al., J. Amer. Chem. Soc. 114: 9217-9218 (1992)), analogous organic syntheses of small compound libraries (Chen, C. et al., J. Amer. Chem. Soc. 116:2661 (1994)), oligocarbamates (Cho, C.Y. et al., Science 261: 1303 (1993)), and/or peptidyl phosphonates (Campbell, D.A. et al., J. Org. Chem. 59: 658 (1994)). *See*, generally, Gordon, E. M. et al., J. Med Chem. 37: 1385 (1994). The contents of all of the aforementioned publications are incorporated herein by reference.

The present invention also encompasses the identified compositions in a pharmaceutical compositions comprising a pharmaceutically acceptable carrier prepared for storage and subsequent administration, which have a pharmaceutically effective amount of the products disclosed above in a pharmaceutically acceptable carrier or diluent. Acceptable carriers or diluents for therapeutic use are well known in the pharmaceutical art, and are described, for example, in Remington's Pharmaceutical Sciences, Mack Publishing Co. (A.R. Gennaro edit. 1985). Preservatives, stabilizers, dyes and even flavoring agents may be provided in the pharmaceutical composition. For example, sodium benzoate, sorbic acid and esters of p-hydroxybenzoic acid may be added as preservatives. In addition, antioxidants and suspending agents may be used.

The compositions of the present invention may be formulated and used as tablets, capsules or elixirs for oral administration; suppositories for rectal administration; sterile solutions, suspensions for injectable administration; and the like. Injectables can be prepared in conventional forms, either as liquid solutions or suspensions, solid forms suitable for solution or suspension in liquid prior to injection, or as emulsions. Suitable excipients are, for example, water, saline, dextrose, mannitol, lactose, lecithin, albumin. sodium glutamate, cysteine hydrochloride, and the like. In addition, if desired, the injectable pharmaceutical compositions may contain minor amounts of nontoxic auxiliary substances, such as wetting agents, pH buffering agents, and the like. If desired, absorption enhancing preparations (e.g., liposomes), may be utilized.

The pharmaceutically effective amount of the composition required as a dose will depend on the route of administration, the type of animal being treated, and the physical characteristics of the specific animal under consideration. The dose can be tailored to achieve a desired effect, but will depend on such factors as weight, diet, concurrent medication and other factors which those skilled in the medical arts will recognize.

In practicing the methods of the invention, the products or compositions can be used alone or in combination with one another, or in combination with other therapeutic or diagnostic agents. These products can be utilized *in vivo*, ordinarily in a mammal, preferably in a human, or *in vitro*. In employing them *in vivo*, the products or compositions can be administered to the mammal in a variety of ways, including parenterally, intravenously, subcutaneously, intramuscularly, colonically, rectally, nasally or intraperitoneally, employing a variety of dosage forms. Such methods may also be applied to testing chemical activity *in vivo*.

As will be readily apparent to one skilled in the art, the useful *in vivo* dosage to be administered and the particular mode of administration will vary depending upon the age, weight and mammalian species treated, the particular compounds employed, and the specific use for which these compounds are employed. The determination of effective dosage levels, that is the dosage levels necessary to achieve the desired result, can be accomplished by one skilled in the art using routine pharmacological methods. Typically, human clinical applications of products are commenced at lower dosage levels, with dosage level being increased until the desired effect is achieved. Alternatively, acceptable *in vitro* studies can be used to establish useful doses and routes of administration of the compositions identified by the present methods using established pharmacological methods.

In non-human animal studies, applications of potential products are commenced at higher dosage levels, with dosage being decreased until the desired effect is no longer achieved or adverse side effects disappear. The dosage for the products of the present invention can range broadly depending upon the desired affects and the therapeutic indication. Typically, dosages may be between about 10 kg/kg and 100 mg/kg body weight, preferably between about 100 µg/kg and 10 mg/kg body weight. Administration is preferably oral on a daily basis.

The exact formulation, route of administration and dosage can be chosen by the individual physician in view of the patient's condition. (*See* e.g., Fingl et al., in The Pharmacological Basis of Therapeutics, 1975). It should be noted that the attending physician would know how to and when to terminate, interrupt, or adjust administration due to toxicity, or to organ dysfunctions. Conversely, the attending physician would also know to adjust treatment to higher levels if the clinical response were not adequate (precluding toxicity). The magnitude of an administrated dose in the management of the disorder of interest will vary with the severity of the condition to be treated and to the route of administration. The severity of the condition may, for example, be evaluated, in part, by standard prognostic evaluation methods. Further, the dose and perhaps dose frequency, will also vary according to the age, body weight, and response of the individual patient. A program comparable to that discussed above may be used in veterinary medicine.

Depending on the specific conditions being treated, such agents may be formulated and administered systemically or locally. Techniques for formulation and administration may be found in Remington's Pharmaceutical Sciences, 18th Ed., Mack Publishing Co., Easton, PA (1990). Suitable routes may include oral, rectal, transdermal, vaginal, transmucosal, or intestinal administration; parenteral delivery, including intramuscular, subcutaneous, intramedullary injections, as well as intrathecal, direct intraventricular, intravenous, intraperitoneal, intranasal, or intraocular injections.

For injection, the agents of the invention may be formulated in aqueous solutions, preferably in physiologically compatible buffers such as Hanks' solution. Ringer's solution, or physiological saline buffer. For such transmucosal administration, penetrants appropriate to the barrier to be permeated are used in the formulation. Such penetrants are generally known in the art. Use of pharmaceutically acceptable carriers to formulate the compounds herein disclosed for the practice of the invention into dosages suitable for systemic administration is within the scope of the invention. With proper choice of carrier and suitable manufacturing practice, the compositions of the present invention, in particular, those formulated as solutions, may be administered parenterally, such as by intravenous injection. The compounds can be formulated readily using pharmaceutically acceptable carriers well known in the art into dosages suitable for oral administration. Such carriers enable the compounds of the invention to be formulated as tablets, pills, capsules, liquids, gels, syrups, slurries, suspensions and the like, for oral ingestion by a patient to be treated.

Agents intended to be administered intracellularly may be administered using techniques well known to

those of ordinary skill in the art. For example, such agents may be encapsulated into liposomes, then administered as described above. All molecules present in an aqueous solution at the time of liposome formation are incorporated into the aqueous interior. The liposomal contents are both protected from the external micro-environment and, because liposomes fuse with cell membranes, are efficiently delivered into the cell cytoplasm. Additionally, due to their hydrophobicity, small organic molecules may be directly administered intracellularly.

Pharmaceutical compositions suitable for use in the present invention include compositions wherein the active ingredients are contained in an effective amount to achieve its intended purpose. Determination of the effective amounts is well within the capability of those skilled in the art, especially in light of the detailed disclosure provided herein. In addition to the active ingredients, these pharmaceutical compositions may contain suitable pharmaceutically acceptable carriers comprising excipients and auxiliaries which facilitate processing of the active compounds into preparations which can be used pharmaceutically. The preparations formulated for oral administration may be in the form of tablets, dragees, capsules, or solutions. The pharmaceutical compositions of the present invention may be manufactured in a manner that is itself known, e.g., by means of conventional mixing, dissolving, granulating, dragee-making, levitating, emulsifying, encapsulating, entrapping, or lyophilizing processes.

Pharmaceutical formulations for parenteral administration include aqueous solutions of the active compounds in water-soluble form. Additionally, suspensions of the active compounds may be prepared as appropriate oily injection suspensions. Suitable lipophilic solvents or vehicles include fatty oils such as sesame oil, or synthetic fatty acid esters, such as ethyl oleate or triglycerides, or liposomes. Aqueous injection suspensions may contain substances which increase the viscosity of the suspension, such as sodium carboxymethyl cellulose, sorbitol, or dextran. Optionally, the suspension may also contain suitable stabilizers or agents that increase the solubility of the compounds to allow for the preparation of highly concentrated solutions.

Pharmaceutical preparations for oral use can be obtained by combining the active compounds with solid excipient, optionally grinding a resulting mixture, and processing the mixture of granules, after adding suitable auxiliaries, if desired, to obtain tablets or dragee cores. Suitable excipients are, in particular, fillers such as sugars, including lactose, sucrose, mannitol, or sorbitol; cellulose preparations such as, for example, maize starch, wheat starch, rice starch, potato starch, gelatin, gum tragacanth, methyl cellulose, hydroxypropylmethyl-cellulose, sodium carboxymethylcellulose, and/or polyvinylpyrrolidone (PVP). If desired, disintegrating agents may be added, such as the cross-linked polyvinyl pyrrolidone, agar, or alginic acid or a salt thereof such as sodium alginate. Dragee cores are provided with suitable coatings. For this purpose, concentrated sugar solutions may be used, which may optionally contain gum arabic, talc, polyvinyl pyrrolidone, carbopol gel, polyethylene glycol, and/or titanium dioxide, lacquer solutions, and suitable organic solvents or solvent mixtures. Dyestuffs or pigments may be added to the tablets or dragee coatings for identification or to characterize different combinations of active compound doses. For this purpose, concentrated sugar solutions may be used, which may optionally contain gum arabic, talc, polyvinyl pyrrolidone, carbopol gel, polyethylene glycol, and/or titanium dioxide, lacquer solutions, and suitable organic solvents or solvent mixtures. Dyestuffs or pigments may be added to the tablets or dragee coatings for identification or to characterize different combinations of active compound doses. Such formulations can be made using methods known in the art (see, for example, U.S. Patent Nos. 5,733,888 (injectable compositions); 5,726,181 (poorly water soluble compounds); 5,707,641 (therapeutically active proteins or peptides); 5,667,809 (lipophilic agents); 5,576,012 (solubilizing polymeric agents); 5,707,615 (anti-viral formulations); 5,683,676 (particulate medicaments); 5,654,286 (topical formulations); 5,688,529 (oral suspensions); 5,445,829 (extended release formulations); 5,653,987 (liquid formulations); 5,641,515 (controlled release formulations) and 5,601,845 (spheroid formulations).

**The Examples illustrate the invention**

**Example 1: Sensitivity of and Precision of a Fluorescent Assay Using Liquid Barriers**

In order to compare the sensitivity of a fluorescent assay using the liquid barriers of the present invention, between about 1.5 microliters and about 1.8 microliters of a solution of fluorescein in borate buffer (10mM sodium borate, pH 9.2) or no solution were added to individual wells of microwell plates having wells with clear bottoms, a black wall, a volume of about 2.5 microliters and a well center-to-well center distance of 1.5 mm, with a well diameter of 1.0 mm and a well height of 3.25 mm. Dow Corning Silicone 200® Fluid 5.0cs (between about 0.2 microliters and about 0.25 microliters) were added to some of the wells. This volume of oil in this container results in a column height of oil of about 0.5 mm in the well. The fluorescence from the wells was measuring by exciting the wells through the bottom with a wavelength of 480nm and reading emission at 534nm from the bottom of the wells using a ball lens (see, U.S. patent application No. (to be determined), entitled "Detector and Screening Device of Ion Channels" filed 7/17/98, having attorney docket number 08366/006001). The results of these studies are presented in **Table 1**.

Table 1

| | Fluorescence From Well Containing | | | | |
|---|---|---|---|---|---|
| | | Fluorescein (molar) | | | |
| | Liquid Barrier | Borate Buffer | $1.00 \times 10^{10}$ | $1.00 \times 10^{9}$ | $1.00 \times 10^{8}$ |
| | | | | | |
| Average[2] | No | 22,725 | 27,828 | 41,294 | 117,725 |
| Standard Deviation | No | 2,166 | 3,537 | 6,296 | 28,799 |
| CV[4] | No | 10% | 13% | 15% | 24% |
| Signal to Background Ratio[1] | No | ND[3] | 0.25 | 0.91 | 4.39 |
| Standard Deviation | No | ND | 0.12 | 0.11 | 1.73 |
| | | | | | |
| Average | Yes | 16,935 | 17,848 | 25,753 | 103,370 |
| Standard Deviation | Yes | 722 | 868 | 1,094 | 10,258 |
| CV | Yes | 4% | 5% | 4% | 10% |
| Signal to Background Ratio | Yes | ND | 0.09 | 0.52 | 5.12 |
| Standard Deviation | Yes | ND | 0.05 | 0.08 | 0.65 |
| | | | | | |

[1]Calculated using fluorescent signal from a well containing buffer with or without fluorescein using the formula: Signal to Background Ratio = ((fluorescent signal from a well with fluorescein — fluorescent signal from a well without fluorescein) / (fluorescent signal from well without fluorescein))
[2]N = 300 wells
[3]ND = Not Determined.
[4]CV = % variation = standard deviation / mean of the sample (N).

The results of these studies demonstrate that the presence of a liquid barrier in a fluorescent assay can decrease the CV of the assay at higher levels of emission. As such, the liquid barrier of the present invention can increase the precision of an assay.

**Example 2: Passage of aqueous solutions through silicone oil and light mineral oil**

This example demonstrates that small volumes of aqueous solutions can pass through a liquid barrier made of silicone oil, but do not pass through a liquid barrier made of light mineral oil. These experiments were performed under approximate standard temperature and pressure (open to the atmosphere at approximately sea level at 25°C).

A. Microliter volumes of solution

One-half milliliter of silicone oil (5cs) (Dow Corning Silicone 200® or light mineral oil (33.5cs) (Fisher Scientific) was dispensed into 0.5ml Eppendorf tubes (polypropylene, VWR Scientific Products). 1.5 microliters of an aqueous solution (deionized water with green food coloring (Schilling, McCormick & Co., Inc., Hunt Valley, MD)) were dispensed onto the oil by contacting a pipette tip (0.1 microliter to 2.0 microliter, Rainin Pipetteman tip P2) having the indicated volume of aqueous solution pendent to the pipette tip to the surface of the silicone oil or light mineral oil. The experiment was repeated using 1.0 ml of light mineral oil or silicone oil in 1.7 ml Eppendorf tubes (polypropylene, VWR Scientific Products) using 2.5 microliter droplets of aqueous solution.

When the 1.5 microliter or 2.5 microliter droplets of aqueous solution was contacted with the surface of the silicone oil, the droplet of aqueous solution passes into the silicone oil and passed to the bottom of the Eppendorf tube. When the 1.5 microliter of 2.5 microliter droplet of aqueous solution was contacted with the surface of the light mineral oil, the droplet aqueous solution formed a droplet that became suspended below the surface of the light mineral oil. This experiment was also repeated using a bulk aqueous solution below silicone oil, which was present before the droplets of aqueous solution were contacted with the silicone oil. When the droplets of aqueous solution passed through the silicone oil, the droplet merged with the bulk aqueous solution below.

B. Picoliter volumes of solution

This experiment was repeated under the same conditions using the same silicone oil or light mineral oil (liquid barriers were between about 0.5 mm and 1.0 mm in thickness) over a bulk aqueous solution in a 0.2 ml Eppendorf tube (polypropylene). However, the colored phosphate buffer saline (PBS) aqueous solution was dispensed by piezo dispensers that forcefully dispense liquid samples at a velocity between about 1 meter/second and about 3 meters/second with a dropplet size between about 94 picoliters and about 270 picoliters at a rate of about 100 droplets/second (piezo dispensers having these dispensing characteristics are commercially available from Packard Instruments. such as the BioChip Arrayer™ and PiezoTips™ as disclosed in Bio Techniques, 25(1):166 (July 1998)). The tip of the piezo dispenser was placed between about 1 mm and about 4 mm from the surface of the silicone oil or light mineral oil. The piezo dispensers were allowed to dispense droplets of aqueous solution between about 94 picoliters and about 270 picoliters.

When silicone oil was used as the liquid barrier over an aqueous sample, the droplets of aqueous solution between about 94 picoliters and about 270 picoliters passed directly through the silicone oil with no detectable droplets forming in the silicone oil or at the air/silicone oil interface or aqueous sample/silicone oil interface. Occasionally, some droplets of aqueous solution that contacted the wall of the tube became localized at the silicone oil/wall interface.

When light mineral oil was used as a liquid barrier over an aqueous sample, droplets of aqueous solution between about 94 picoliters and about 270 picoliters localized directly under the air/light mineral oil interface. When the droplets of aqueous solution in the light mineral oil coalesced to form larger droplets of aqueous solution (about 100 nanoliters in volume), only then did they pass through the light mineral oil to the aqueous sample below. Some droplets of aqueous solution remained on the surface of light mineral oil, some became trapped in the light mineral oil, and some rested on the light mineral oil side of the light mineral oil/bulk aqueous solution interface.

This experiment was repeated using a glass tube having an internal diameter of 1.1 mm as the container rather than a 0.2 ml Eppendorf tube as the container to model high throughput screening application that use wells of small diameter. Otherwise, the same conditions, devices, reagents and methods were used. Whereas light mineral oil can be dispensed using dispensers such as solenoids and piezos used in high throughput applications, heavy mineral oil (Sigma Catalogue 1992, Sigma Chemical Co., St. Louis MO, see especially page 684), could not and thus is not applicable for use in high throughput automated systems.

When silicone oil was used as a liquid barrier in the glass tube with an inside diameter of 1.1 mm, no droplets of aqueous solution having a volume between about 94 picoliters and about 270 picoliters became detectably localized (10X magnification. visual inspection) at the silicone oil/tube interface, at the silicone oil/air interface or the silicone oil aqueous sample interface. Thus, under these conditions, the droplets of aqueous solution passed through the silicone oil into the bulk aqueous solution.

When light mineral oil was used as the liquid barrier in the glass tube with an inside diameter of 1.1 mm, droplets of aqueous solution having a volume between about 94 picoliters and about 270 picoliters did not pass through the light mineral oil. In the glass tube experiments, the mineral oil/bulk aqueous solution interface and silicone oil/bulk aqueous solution interface was detectably less curved than in the Eppendorf tube experiments.

These results establish that oils such as silicone oil are preferable liquid barriers because they allow the passage of aqueous solutions through the liquid barrier. Such liquid barriers are preferred for certain applications, such as high throughput screening of test chemicals, because small volumes of valuable reagents can be added to the surface of the liquid barrier and pass through the liquid barrier into a sample. Furthermore, such oils can themselves be dispensed in small volumes using dispensers that are preferable for use in high throughput applications.

**Example 3: Comparison of efficacy of mechanical barriers and liquid barriers in a cell based assay**

This example compares the efficacy of mechanical barriers and liquid barriers in a mammalian cell culture assay using a transcription read-out to screen chemicals for biological activity.

*Mammalian cell culture*

The cell line used in this example was the Jurkat C2 cell line. These cells are a wild-type Jurkat cell line stably transfected with nucleic acids that encode a 3X NFAT response element operably linked to beta-lactamase expression. In addition, the C2 cell line has been stably transfected with nucleic acids that encode the M1 muscarinic receptor. The activation of beta-lactamase expression in this clone can be accomplished using an M1-muscarinic agonist, such as carbachol. Thus, this cell line can be used to screen compounds for their ability to modulate the activity of the M1 receptor by monitoring changes in beta-lactamase expression in cells. Beta-lactamase activity in these cells can be

detected using fluorescent probes, such as CCF2-AM, described in U.S. Patent No. 5,741,657 to Tsien et al., issued 4/21/98 and WO 96/30540 to Tsien et al., published October 3, 1997.

The C2 cells were maintained in RPMI 1640 media (Gibco-BRL) supplemented with 8% heat-inactivated fetal bovine serum (Summit Biotechnology), 100 micromolar non-essential amino acids (Gibco-BRL). 1 mM sodum pyruvate and 850 micrograms/ml Geneticin (Gibco-BRL). These cells were maintained in a 5% $CO_2$ at 37°C in a humidified atmosphere. Prior to use in a screening assay, cells were grown to a density not exceeding 1 x $10^6$ cells/ml, washed in serum-free RPMI 1640 media, and expanded to a concentration of 2 x $10^6$ cells/ml in RPMI 1640 media. Fifty microliters of this preparation of cells were dispensed into individual wells of 96-well microtiter plates supplied with a mechanical barrier (a polystyrene lid) (Corning Costar, #9304).

*Compound preparation*

A commercially available library of about 800 compounds known to have pharmacological activity was provided by the manufacturer at a concentration of 5 mg/ml. Each member of the library was provided separately. Stock solution of samples of each member of the library were made 0.5 mg/ml in 100% DMSO. For assays, 0.5 microliters of each of the stock compound solutions was transferred to an assay plate for a final screening concentration of 5 micrograms per milliliter.

*Screening assay - effects of carbachol on C2 cells*

Ninety-six well polystyrene microtiter plates (Corning Costar #3904) were used in this assay. Fifty microliters of RPMI 1640 media with 0.2 mM carbachol were added to experimental wells and 50 microliters of RPMI 1640 without carbachol were added to control wells. Fifty microliters of cell prepared as described above were added to the wells. For wells having a liquid barrier, 20 microliters of silicone oil (Dow Corning Silicone 200® Fluid 5.0 cs (linear polydimethylsiloxane polymers) (see, "Information About Dow Corning Silicone Fluids, Dow Corning (1993)) were added to each well and no mechanical barrier was placed on the 96-well microtiter plate. For wells having a mechanical barrier (polystyrene lid), no silicone oil was added to the wells, and the mechanical barrier provided with the microtiter plate was engaged. These 96-well microtiter plates were incubated at 37°C for four hours, after which aliquots of CCF2/AM in an aqueous solution were added to the wells according to the procedures set forth in WO 96/30540. The aqueous solution of CCF2/AM was added on top of the liquid barriers, when present, and passed through the liquid barrier into the sample. CCF2/AM is a fluorescent FRET-based indicator of beta-lactamase activity and reports the presence thereof and has the following structure:

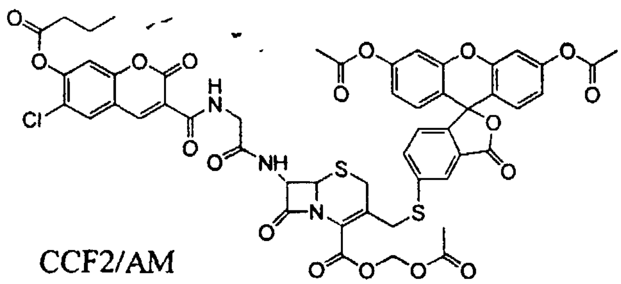

CCF2/AM

The samples were incubated at room temperature for an additional hour. Each well was excited from below the plate with light having a wavelength of 460 nm, and the emission at 460 nm and 538 nm were measured from below the plate. The ratio of the emission at 460 nm to the emission at 538 nm (460/538) were determined, wherein an increase in the 460/538 ratio indicates an increase in beta-lactamase activity in the sample. Microscopic examination of the cells after the four hour incubation indicated no visual difference between cells cultured using mechanical or liquid barriers.

Raw data obtained from these experiments were corrected for background fluorescence of the assay medium by subtracting the average value obtained for the control wells that did not have carbachol added. The ratio of corrected emission values at 460 nm and 538 nm were calculated. These data are summarized in **Table 2** and indicate that the results obtained using the mechanical and liquid barriers are not statistically different.

Table 2

| | Ratio of 460/380 emission (mean + standard deviation) | |
|---|---|---|
| **Type of Barrier** | **No Carbachol** | **0.1 mM Carbachol** |
| Liquid | 1.1 ± 0.5 | 10.2 ± 1.1 |
| Mechanical | 0.9 ± 0.5 | 9.5 ± 0.9 |

These results indicate that the C2 cells performed equally well in a mammalian cell based transcription readout assay when cultured in a microtiter plate fitted with a mechanical or liquid barrier. Importantly, these results indicate that the liquid barrier did not interfere with the biological processes of the cells, the operation of the assay, or the fluorescence detection system used.

**Example 4: Screening a library of chemicals for activity using mechanical and liquid barriers.**

Having determined that liquid barriers did not affect a cell based assay using a fluorescent detection system, the general procedures described in **Example 3** were used to screen individual members of a library of chemicals known to have pharmacological activity for the ability to modulate beta-lactamase activity C2 cells. A library of about 480 individual chemicals was obtained from a commercial entity. The chemicals were provided by the manufacturer at a concentration of 5 mg/ml in 100% DMSO to form library stock solutions. The members of the library were diluted individually to 0.5 mg/ml in 100% DMSO. These solutions were used in place of the carbachol solution in the procedure described in **Example 3**.

The ability of these compounds to modulate beta-lactamase activity in C2 cells in the presence of mechanical and liquid barriers was measured using the procedures set forth in **Example 3**. The general procedures described in **Example 3** were used with the following modifications. Before a liquid barrier comprising silicone oil (Dow Corning Silicone 200® Fluid 5.0 cs) was added to the wells or a mechanical lid was engaged on the 96-well microtiter plate, 0.5 microliters of the library stock solution were added to individual wells. This created an antagonist assay wherein cells were stimulated with carbachol to elicit transcriptional activation of the beta-lactamase gene by way of the M1 receptor. The addition of a test compound to these stimulated cells identifies compounds that can modulate (for example, increase or decrease) the expression of beta-lactamase. A decrease in beta-lactamase expression in the presence of a test compound indicates that the test compound blocks the M1 receptor and is therefore an antagonist of that receptor or an associated pathway. The results of these studies are presented in **FIG. 1A, FIG. 1B** and **FIG. 1C**. These studies establish that the results obtained in a cell-based assay using a mechanical barrier or a liquid barrier are not significantly different at $p<0.05$.

**Example 5: Comparing the activity of chemicals known to modulate M1 activity using mechanical or liquid barriers**

To further validate the use of liquid barriers, the general methods set forth in **Example 3** and **Example 4** were followed using compounds known to modulate the M1 receptor activity rather than members of a chemical library. As shown in **Table 3**, the inhibition of M1 receptor activity as measured by beta-lactamase expression in the C2 cells was not significantly different when assays were performed using liquid or mechanical barriers.

Table 3

| | Percent inhibition of beta- lactamase expression in C2 cells in response to the presence of the indicated chemical | |
|---|---|---|
| **Chemical** | **Mechanical barrier** | **Liquid barrier** |
| Atropine | 86 | 90 |
| Benztropine | 88 | 91 |
| Clemastine | 75 | 66 |

Table 3 (continued)

| | Percent inhibition of beta- lactamase expression in C2 cells in response to the presence of the indicated chemical | |
|---|---|---|
| **Chemical** | **Mechanical barrier** | **Liquid barrier** |
| Clidinium | 82 | 91 |
| Clozapine | 83 | 86 |
| Dicyclomine | 89 | 58 |
| Ethopropazine | 88 | 43 |
| Homatropine | 88 | 88 |
| Hyoscyamine | 92 | 89 |
| Isopropamine | 91 | 78 |
| Mepenzolate | 91 | 90 |
| Methscopolamine | 89 | 92 |
| Propantheline | 95 | 95 |
| Scopolamine | 94 | 93 |

All publications, including patent documents and scientific articles, referred to in this application are incorporated herein by reference in their entirety for all purposes to the same extent as if each individual publication were individually incorporated by reference.

All headings are for the convenience of the reader and should not be used to limit the meaning of the text that follows the heading, unless so specified.

## Claims

1. A composition comprising a sample and a liquid barrier, wherein said liquid barrier can reduce evaporation of a liquid sample, is permeable to respiratory gases, and does not substantially partition test chemicals.

2. The composition of claim 1, wherein said liquid barrier does not consist of mineral oil with a viscosity greater than about 30 cs.

3. The composition of claim 1 or 2, wherein said liquid barrier has a density between about 0.7 g/ml and about 0.95 g/ml.

4. The composition of any one of claims 1 to 3, wherein said liquid sample is an aqueous sample.

5. The composition of any one of claims 1 to 4, wherein the ratio of the volume of said liquid barrier to the volume of said liquid sample is less than about 4.

6. The composition of claim 5, wherein the ratio of the volume of said liquid barrier to the volume of said liquid sample is less than about 1.

7. The composition of any one of claims 1 to 4, wherein said liquid barrier is less than about 1 mm thick.

8. The composition of claim 7, wherein said liquid barrier is less than about 0.5 mm thick.

9. The composition of any one of claims 1 to 8, wherein said liquid barrier absorbs, scatters or reflects ultraviolet, visible or infrared radiation.

10. The composition of any one of claims 1 to 8, wherein said liquid barrier is not substantially fluorescent and does not substantially absorb ultraviolet, visible or infrared electromagnetic radiation.

**11.** A composition comprising a sample and a liquid barrier, wherein said liquid barrier allows a liquid to traverse into said sample, and wherein said liquid barrier is between about 0.01 mm and about 5 mm in thickness.

**12.** The composition of claim 11, wherein said liquid barrier is between about 0.1 mm and about 1 mm in thickness.

**13.** The composition of claim 11 or 12, wherein said liquid is an aqueous solution.

**14.** The composition of claim 13, wherein said aqueous solution contains DMSO.

**15.** The composition of any one of claims 11 to 14, wherein said liquid is in the form of droplets.

**16.** The composition of claim 15, wherein said droplets are forcefully dispensed onto said liquid barrier.

**17.** The composition of any one of claims 1 to 16, wherein said sample is denser than said liquid barrier.

**18.** The composition of any one of claims 1 to 17, wherein said sample comprises at least one living cell.

**19.** The composition of claim 18, wherein said at least one living cell is a eukaryotic cell.

**20.** The composition of any one of claims 1 to 19, wherein said liquid barrier comprises an oil.

**21.** The composition of claim 20, wherein said oil comprises silicone oil.

**22.** The composition of claim 21, wherein said silicone oil comprises at least one polydimethylsiloxane polymer.

**23.** The composition of any one of claims 11 to 22, wherein said liquid barrier is not substantially fluorescent.

**24.** The composition of any one of claims 11 to 22, wherein said liquid barrier does not substantially absorb ultraviolet, visible or infrared electromagnetic radiation.

**25.** A method of making a liquid barrier, comprising the steps of:

contacting a sample with a liquid barrier, wherein said liquid barrier can reduce evaporation of a liquid sample, is compatible with living cells, allows a liquid to traverse into said sample, and does not substantially partition test chemicals.

**26.** The method of claim 25, wherein said liquid barrier allows the passage of a liquid sample into said sample.

**27.** A method of reducing the evaporation of a liquid sample, comprising the steps of:

contacting a sample with a liquid barrier, wherein said liquid barrier can reduce evaporation of said sample, is compatible with living cells, allows a liquid to traverse into said sample, and does not substantially partition test chemicals.

**28.** A system for optical measurements, comprising:

at least one reagent for an assay and a device, said device comprising a container and a platform,
wherein said container comprises a liquid barrier,
further wherein said liquid barrier can reduce evaporation of a liquid sample, is compatible with living cells, allows a liquid to traverse into a sample, and does not substantially partition test chemicals.

**29.** The system of claim 35,

further comprising a detector and a control unit for controlling said detector.

**30.** A method for detecting the presence of an analyte in a sample by detecting light emitted from a sample, said method comprising the steps of:

a) exciting at least one sample with radiation of a first wavelength,
wherein said sample comprises a sample and a liquid barrier,
wherein said liquid barrier can reduce evaporation of a liquid sample, is compatible with living cells, allows a liquid to traverse into said sample, and does not substantially partition test chemicals, and
b) measuring the emission of radiation of a second wavelength emitted from said at least one sample,
wherein the amount of radiation of said second wavelength emitted from said at least one sample indicates the presence or absence of an analyte in said at least one sample.

**31.** A method for detecting the presence of an analyte in a sample by detecting light transmitted through a sample, said method comprising the steps of:

a) exposing at least one sample with radiation,
wherein said sample comprises a sample and a liquid barrier, wherein said liquid barrier can reduce evaporation of a liquid sample, is compatible with living cells, allows a liquid to traverse into said sample, and does not substantially partition test chemicals, and
b) measuring an optical property of said radiation through said at least one sample,
wherein the amount of said transmission indicates the presence or absence of an analyte in said at least one sample.

**32.** A method for identifying a modulator in a sample by detecting light emitted from a sample said method comprising the steps of:

a) exciting at least one sample with radiation of a first wavelength
wherein said sample comprises a liquid barrier, wherein said liquid barrier can reduce evaporation of a liquid sample, is compatible with living cells allows a liquid to traverse into said sample and does not substantially partition test chemicals and
b) measuring the emission of radiation of a second wavelength emitted from said at least one sample,
wherein the amount of radiation of said second wavelength emitted from said at least one sample indicates the presence of absence of a modulator in said at least one sample

**33.** A method for identifying a modulator in a sample by detecting light transmitted through a sample, said method comprising the steps of:

a) exposing at least one sample with radiation,
wherein said sample comprises a liquid barrier, wherein said liquid barrier can reduce evaporation of a liquid sample, is compatible with living cells allows a liquid to traverse into said sample, and does not substantially partition test chemicals, and
b) measuring an optical property of said radiation transmitted through said at least one sample,
wherein the amount of said transmission indicates the presence or absence of a modulator in said at least one sample.

**34.** A compound identified by the method comprising the steps of:

a) exciting at least one sample with radiation of a first wavelength,
wherein said sample comprises a liquid barrier, wherein said liquid barrier can reduce evaporation of a liquid sample, is compatible with living cells, allows a liquid to traverse into said at least one sample and does not substantially partition test chemicals, and
b) measuring the emission of radiation of a second wavelength emitted from said at least on sample,
wherein the amount of radiation of said second wavelength emitted from said at least one sample indicates the presence or absence or said compound.

**35.** A compound identified by the method comprising the steps of:

a) exposing at least one sample with radiation,
wherein said sample comprises a liquid barrier, wherein said liquid barrier can reduce evaporation of a liquid sample, is compatible with living cells, allows a liquid to traverse into said at least one sample, and does not substantially partition test chemicals, and
b) measuring an optical property of said radiation through said at least one sample,

wherein the amount of transmission indicates the presence or absence of said compound.

**36.** A method for testing a therapeutic for therapeutic activity and toxicology, comprising the steps of:

a) identifying a therapeutic using the method comprising the steps of:

1) exciting at least one sample with radiation of a first wavelength.
wherein said at least one sample comprises a liquid barrier,
wherein said liquid barrier can reduce evaporation of a liquid sample, allows a liquid to traverse into said at least one sample is compatible with living cells, and does not substantially partition test chemicals, and
2) measuring the emission of radiation of a second wavelength emitted from said at least one sample,

wherein the amount of radiation of said second wave length emitted from said at least one sample indicates the presence or absence of a therapeutic in said at least one sample, and
b) monitoring the toxicology of said therapeutic in an *in vitro* model, and monitoring the efficacy of said therapeutic in an *in vitro* model.

**37.** A method for testing a therapeutic for therapeutic activity and toxicology, comprising the steps of:

a) identifying a therapeutic using the method comprising the steps of:

1) exposing at least one sample with radiation,
wherein said at least one sample comprise a liquid barrier,
wherein said liquid barrier can reduce evaporation of a liquid sample, allows a liquid to traverse into said at least one sample, is compatible with living cells, and does not substantially partition test chemicals, and
2) measuring an optical property of said radiation transmitted through said at least one sample,
wherein the amount of radiation transmitted through said at least one sample indicates the presence or absence of a therapeutic in said at least one sample, and

b) monitoring the toxicology of said therapeutic in an *in vitro* model, and monitoring the efficacy of said therapeutic in an *in vitro* model.

**38.** A therapeutic identified by the method comprising the steps of:

a) identifying a therapeutic using the method comprising the steps of:

1) exciting at least one sample with radiation of a first wavelength,
wherein said at least one sample comprises a liquid barrier.
wherein said liquid barrier can reduce evaporation of a liquid sample, is compatible with living cells, allows a liquid to traverse into said sample, and does not substantially partition test chemicals, and
2) measuring the emission of radiation of a second wavelength emitted from said at least one sample,

wherein the amount of radiation of said second wavelength emitted from said at least one sample indicates the presence or absence of a therapeutic in said at least one sample, and
b) monitoring the toxicology of said therapeutic in an *in vitro* model, and monitoring the efficacy of said therapeutic in an *in vitro* model.

**39.** A therapeutic identified by the method comprising the steps of:

a) identifying a therapeutic using the method comprising the steps of:

1) exposing at least one sample with radiation,
wherein said at least one sample comprises a liquid barrier
wherein said liquid barrier can reduce evaporation of a liquid sample, is compatible with living cells, allows a liquid to traverse into said sample, and does not substantially partition test chemicals, and
2) measuring an optical property of said radiation transmitted through said at least one sample,
wherein the amount or transmission indicates the presence or absence of a therapeutic in said at least one sample, and

b) monitoring the toxicology of said therapeutic in an *in vitro* model, and monitoring the efficacy of said therapeutic in an *in vitro* model.

**40.** The method of any one of claims 25 to 27, the system of claim 28 or 29, the method of any one of claims 30 to 33, the compound of claim 34 or 35, the method of claim 36 or 37 or the therapeutic of claim 38 to 39, wherein said liquid barrier is between about 0.01 and about 5 mm thick.

FIG. 1A

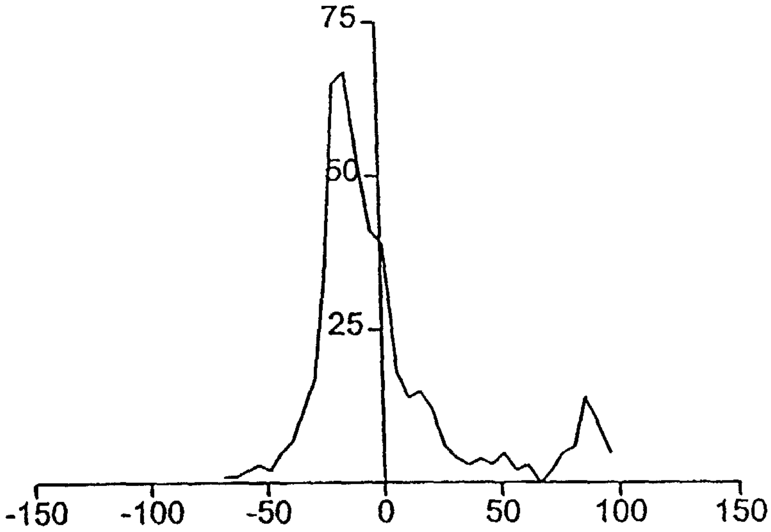


FIG. 1B

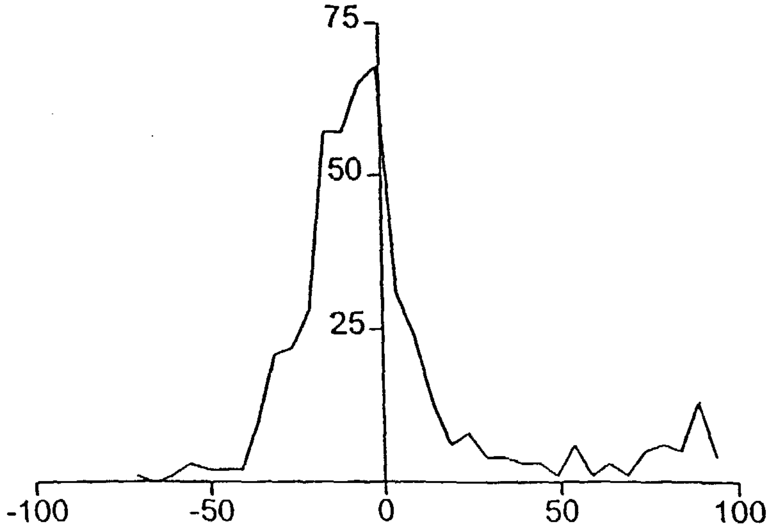

FIG. 1C

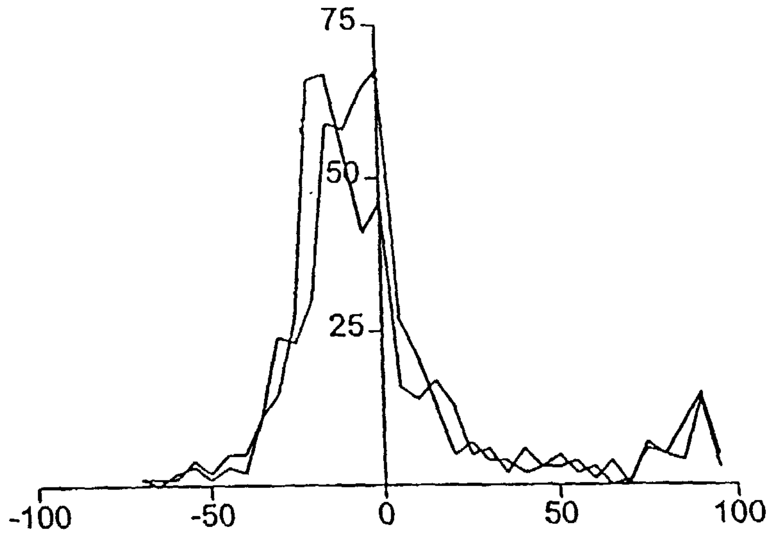

European Patent Office

## PARTIAL EUROPEAN SEARCH REPORT

which under Rule 45 of the European Patent Convention shall be considered, for the purposes of subsequent proceedings, as the European search report

Application Number: EP 99 12 2323

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 196 28 928 A (BASF AG)<br>22 January 1998 (1998-01-22)<br>* page 4, lines 5-60; example 2; figures * | 1-33,36, 37,40 | G01N1/28<br>G01N33/50 |
| X | JP 06 118080 A (TOYOBO KK)<br>28 April 1994 (1994-04-28)<br>* page 2, paragraph [0005]; table 1 *<br>-& DATABASE WPI<br>Section Ch, Week 9422<br>Derwent Publications Ltd., London, GB;<br>Class B04, AN 1994-178851<br>XP002131696<br>* abstract * | 1-33,40 | |
| X | US 5 229 163 A (FOX W A)<br>20 July 1993 (1993-07-20)<br>* column 6, line 26 - column 7, line 36; column 8, lines 12-23; figure 7 * | 1-33,40 | |
| X | US 5 225 325 A (MILLER P C ET AL)<br>6 July 1993 (1993-07-06)<br>* column 6, line 35 - column 7, line 49 *<br>-/-- | 1-20, 25-27,40 | TECHNICAL FIELDS SEARCHED (Int.Cl.7)<br>G01N |

### INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| BERLIN | 28 February 2000 | Johnson, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C07)

European Patent Office

# PARTIAL EUROPEAN SEARCH REPORT

Application Number
EP 99 12 2323

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int.Cl.7) |
| P,X | WO 98 58240 A (TOYOTA JIDOSHA KK)<br>23 December 1998 (1998-12-23)<br>* abstract; page 11; figures 1-3 *<br>-& DATABASE WPI<br>Section Ch, Week 9906<br>Derwent Publications Ltd., London, GB;<br>Class B04, AN 1999-070791<br>XP002131697<br>* abstract *<br>----- | 1-33,40 | |
| | | | TECHNICAL FIELDS SEARCHED (Int.Cl.7) |

EPO FORM 1503 03.82 (P04C10)

European Patent Office

**INCOMPLETE SEARCH SHEET C**

Application Number
EP 99 12 2323

Claim(s) searched incompletely:
1-33 36 37 40

Claim(s) not searched:
34 35 38 39

Reason for the limitation of the search:

Present claims 1-24 relate to compositions defined by reference to desirable characteristics or properties. These include the ability of the liquid barrier to reduce evaporation, its permeability to respiratory gases (else allow a liquid to traverse it), its compatibilty with living cells, and the fact that the liquid barrier does not substantially partition test chemicals. Other properties are specified in the dependent claims. According to the description of the current application, the liquid barriers for which protection is sought may possess these desireable properties in any combination (cf. description, page 14, lines 23-26). So the claims cover all compositions having these characteristics or properties, whereas the application provides support within the meaning of Article 84 EPC for only a very limited number of such compositions. Indeed only the use of silicone oil for the liquid barriers is disclosed in the examples offered in support of the claims. Although a measure of generalisation from the examples can usually be allowed, the applicants do not disclose how the invention is to be realised across the whole scope of the claims. Instead, the applicants only prescribe a series of tests for determining whether other compositions possess these properties (cf. eg. description, page 14, lines 19-23; page 15, lines 20-24). Since the Search Division is not in a position to carry out such tests, it cannot make a valid comparison between compositions found by searching in the prior art and those which the applicants seek to protect. Therefore, in the present case, these claims so lack support, and the application so lacks disclosure, that a meaningful search over the whole of the claimed scope is impossible.

Also, claims 34, 35, 38 and 39 are directed to a chemical compound (or therapeutic) but the subject matter is defined by reference to the method of analysis used to identify the compound. Thus the category of the claim is not clear. In the European system, a claim to a chemical compound is a claim to the chemical compound per se , and the method of identifying the compound imposes no restriction on the scope of protection afforded. As no other features are employed in the definition of these claims, it is not possible to tell whether any particular compound falls within the scope of the claims, or not. Therefore a meaningful search for the subject matter of these claims is not possible.

Moreover, the problem is compounded by the various definitions of the invention given in the multiple independent claims 1, 11, 25, 27, 28, 30-39. Overlapping and inconsistent definitions of subject matter make it difficult to establish what constitute the essential features of the invention and impose an undue burden on others seeking to establish the extent of protection afforded by the claims. Inconsistencies between the description and the claims over preferred features add to this burden (cf. eg. description, page 14, lines 23-28). Thus the claims as a whole lack clarity, in breach of Article 84 EPC. This lack of clarity is such

European Patent Office

**INCOMPLETE SEARCH SHEET C**

Application Number
EP 99 12 2323

as to render a meaningful search over the whole of the claimed scope impossible.

Consequently, the search has been carried out for those parts of the claims which appear to be clear, supported and disclosed, namely those parts relating to compositions comprising a sample and a liquid barrier made from a low viscosity silicone oil, in particular polydimethylsiloxane (cf. examples in the description; original claims 20-22). The subject matter of claims 25-33, 36, 37 and 40 was searched only in so far as it relates to liquid barriers made from low viscosity silicone oil etc. Claims 34, 35, 38 and 39 were not searched.

## ANNEX TO THE EUROPEAN SEARCH REPORT ON EUROPEAN PATENT APPLICATION NO. EP 99 12 2323

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2000

| Patent document cited in search report | Publication date | Patent family member(s) | Publication date |
|---|---|---|---|
| DE 19628928 A | 22-01-1998 | AU 3541997 A | 10-02-1998 |
| | | CA 2260807 A | 29-01-1998 |
| | | CZ 9900157 A | 11-08-1999 |
| | | WO 9803257 A | 29-01-1998 |
| | | EP 0948398 A | 13-10-1999 |
| | | NO 990186 A | 15-01-1999 |
| JP 06118080 A | 28-04-1994 | NONE | |
| US 5229163 A | 20-07-1993 | US 5041266 A | 20-08-1991 |
| US 5225325 A | 06-07-1993 | CA 2077451 A,C | 03-09-1991 |
| | | EP 0517818 A | 16-12-1992 |
| | | JP 2966522 B | 25-10-1999 |
| | | JP 5505239 T | 05-08-1993 |
| | | WO 9113336 A | 05-09-1991 |
| | | US 5418138 A | 23-05-1995 |
| | | US 5322771 A | 21-06-1994 |
| WO 9858240 A | 23-12-1998 | NONE | |

EPO FORM P0459

For more details about this annex : see Official Journal of the European Patent Office, No. 12/82